# EUROPÄISCHE PATENTSCHRIFT

(11) **EP 1 757 179 B1**
(45) Veröffentlichungstag und Bekanntmachung des Hinweises auf die Patenterteilung: **21.10.2015**
(21) Anmeldenummer: 06017429.9
(22) Anmeldetag: 22.08.2006
(51) Int. Cl.: A01B 3/421, F15B 11/15

(54) **Hydraulische Steuerung für einen Drehpflug**
Hydraulic control for a turn over plow
Contrôle hydraulique pour une charrue réversible

(30) Priorität: 25.08.2005 AT 13982005
(43) Veröffentlichungstag der Anmeldung: 28.02.2007
(73) Patentinhaber: Weber-Hydraulik GmbH, 4460 Losenstein (AT)
(72) Erfinder: Brantner, Martin, 4442 Kleinraming (AT)
(74) Vertreter: Ofner, Clemens

(56) Entgegenhaltungen:
- EP-A2- 0 416 206
- EP-B1- 0 067 286
- DE-A1- 2 903 408
- DE-A1- 3 212 285
- DE-A1- 3 908 985
- DE-A1- 4 311 275

## Beschreibung

Die Erfindung betrifft ein Verfahren zur Steuerung eines doppeltwirkenden Wendezylinders eines Drehpfluges und eine Steuervorrichtung für einen Drehpflug sowie ein Verfahren zur Steuerung von Hydraulikzylindern eines Drehpfluges mit Rahmeneinschwenkung und eine Folgesteuervorrichtung für einen Drehpflug mit Rahmeneinschwenkung wie sie in den Oberbegriffen der Ansprüche 1, 2, 13 und 14 beschrieben sind. Weiters betrifft die Erfindung einen Drehpflug wie in den Oberbegriffen der Ansprüche 12 und 33 beschrieben.

Drehpflüge zum Anbau an Zugmaschinen oder Schlepper sind im Allgemeinen mit hydraulischen Betätigungs- und Steuervorrichtungen zum Wenden des Pflugrahmens ausgestattet. Diese zeichnen sich durch einen einfachen und robusten Aufbau aus, der aber trotzdem eine einfache Bedienung und Wartungsfreundlichkeit gewährleisten muss. Gängige Ausführungen von Pflugsteuerungen sind in der Lage, bei Pflügen mit einem einzelnen Wendezylinder oder bei Pflügen mit einer Pflugrahmeneinschwenkung mittels Wendezylinder und Schwenkzylinder den Wendevorgang durch einfaches Beschalten der Steuervorrichtung mit einem von der Zugmaschine bereitgestellten Hydraulik-Hochdruck selbsttätig ohne weiteren erforderlichen Eingriff des Bedieners auszuführen. Der Wendezylinder dreht dabei einen Anlenkpunkt des Pflugrahmens auf einem Teil einer Kreisbahn um eine gerätefeste Achse, wobei in einem durch die Kreisbahn vorgegebenen Totpunkt der Bewegung die Bewegungsrichtung des Wendezylinders umgeschaltet wird.

Bei Drehpflügen mit Pflugrahmeneinschwenkung ist zusätzlich vor bzw. nach dem eigentlichen Wendevorgang ein Einschwenken bzw. Ausschwenken des Pflugrahmens durch den Schwenkzylinder vorgesehen.

Eine Steuervorrichtung für das Verschwenken eines Drehpfluges ist aus der EP 0 067 286 B2 bekannt. Bei dieser wird die Bewegungsrichtungsumkehr des Wendezylinders im Totpunkt der Bewegung durch ein Vierwege-Zweipositionsventil bewirkt, das in der Zuleitung und der Rücklaufleitung des Wendezylinders angeordnet ist. Es verbindet in der durch eine Druckfeder vorgegebenen Ruhestellung einen Hochdruckanschluss mit der Zuleitung zum kolbenstangenseitigen Zylinderraum des Wendezylinders und eine Rücklaufleitung vom kolbenseitigen Zylinderraum des Wendezylinders mit einem weitgehend drucklosen Rücklaufanschluss wodurch die Kolbenstange einfährt sowie in der Umschaltstellung den Hochdruckanschluss mit der Zuleitung zum kolbenseitigen Zylinderraum sowie eine Rückleitung vom kolbenstangenseitigen Zylinderraum mit dem Rücklaufanschluss, wodurch die Kolbenstange wieder ausfährt.

Zur Auslösung der Umschaltung des Vierwege-Zweipositionsventils weist die Steuervorrichtung ein Folgeventil oder Differenzdruckventil auf, das durch eine Federkraft in Sperrstellung gehalten wird. Gleichsinnig mit der Federkraft wird das Folgeventil über eine Steuerleitung mit dem Druck in der Rücklaufleitung zwischen kolbenseitigem Zylinderraum des Wendezylinders und Vierwege-Zweipositionsventil beaufschlagt. Gegensinnig zur Federkraft ist das Folgeventil über eine Steuerleitung mit dem Druck in der Zulaufleitung zwischen Vierwege-Zweipositionsventil und kolbenstangenseitigem Zylinderraum des Wendezylinders beaufschlagt. Vor Erreichen des Totpunkts reichen die Federkraft und der Druck in der Rückleitung des Wendezylinders aus, das Folgeventil entgegen dem Druck in der Zuleitung des Wendezylinders in der Sperrstellung zu halten.

Bei Erreichen des Totpunktes allerdings steigt der Druck in der Zuleitung zum Wendezylinder stark an und gleichzeitig endet der Rückfluss von Hydraulikfluid in der Rücklaufleitung, wodurch ein durch ein Drosselelement in der Rücklaufleitung bewirkter Staudruck zusammenbricht, die Rücklaufleitung also weitgehend drucklos wird. Im Folgeventil übersteigt nun der Steuerdruck von der Zuleitung die Summe aus Federkraft und Steuerdruck von der Rücklaufleitung, das Folgeventil geht in Durchgangsstellung und über eine weitere Steuerleitung wird der hohe Druck in der Zuleitung zum Vierwege-Zweipositionsventil geleitet. Dort wirkt dieser Druck gegensinnig zur Druckfeder und bewirkt das Umschalten des Vierwege-Zweipositionsventils im Totpunkt, wodurch die Bewegungsrichtung des Wendezylinders umgekehrt wird.

Weiters ist aus der Anmeldeschrift EP 0 416 206 A2 eine Folgesteuerung bzw. Vorrangschaltung für einen Drehpflug mit Rahmeneinschwenkung bekannt. Der Ablauf des Wendevorganges umfasst dabei das Einschwenken des Pflugrahmens durch Ausfahren des Schwenkzylinders, eine Teildrehung des Pflugrahmens durch Einfahren des Wendezylinders bis zum Totpunkt, eine weitere Teildrehung des Pflugrahmens durch Ausfahren des Wendezylinders und das Ausschwenken des Pflugrahmens durch Einfahren des Schwenkzylinders.

Die Folgesteuerung umfasst dabei in einer Weiterbildung der Ausführung gemäß Anspruch 25 und Fig. 3 der EP-A einen doppeltwirkenden Schwenkzylinder, einen doppeltwirkenden Wendezylinder (Drehzylinder) und ein gemeinsames Steuerventil in den Leitungen zu den Zylindern zur Umsteuerung der Bewegungsrichtungen.

Das Steuerventil wird mit einer Druckfeder in der Ruhestellung gehalten, in der der kolbenstangenseitige Zylinderraum (Ringraum) des Wendezylinders und der kolbenseitige Zylinderraum (Kolbenraum) des Schwenkzylinders mit der Zuleitung vom Hochdruckanschluss verbunden sind, während in der Umschaltstellung der kolbenseitige Zylinderraum des Wendezylinders und der kolbenstangenseitige Zylinderraum des Schwenkzylinders mit der Zuleitung verbunden sind.

Zur Auslösung der Umschaltung des Steuerventils weist die Folgesteuerung wie bei der einfachen Pflugsteuerung gemäß EP 0 067 286 B2 ein Folgeventil oder Differenzdruckventil auf, das durch eine Federkraft in Sperrstellung gehalten wird. Gleichsinnig mit der Federkraft wird das Folgeventil wieder über eine Steuerleitung mit dem Druck (Staudruck) in der Leitung zwischen Steuerventil und kolbenseitigem Zylinderraum des Wendezylinders und gegensinnig zur Federkraft über eine Steuerleitung mit dem Druck in der Leitung zwischen Steuerventil und kolbenstangenseitigem Zylinderraum des Wendezylinders beaufschlagt, wodurch das Folgeventil beim Erreichen des Totpunktes der Einfahrbewegung des Wendezylinders schaltet und der hohe Druck in der Zuleitung zum Wendezylinder über eine Steuerleitung vom Folgeventil zum Steuerventil geleitet wird, wodurch dieses entgegen der Druckfederkraft in die Umsteuerstellung geschaltet wird und die Bewegungsrichtungen der Zylinder umgekehrt werden.

Damit die beiden Zylinder die Bewegungen aufeinander folgend und nicht gleichzeitig ausführen, umfasst die Folgesteuerung weiters Steuerventilanordnungen in den Rücklaufleitungen der Zylinder zur Steuerung des Hydraulikmittelabflusses aus den Zylindern, wobei der Rücklauf von Hydraulikfluid eines bevorrangten Zylinders durch die Steuerventilanordnung den Rücklauf von Hydraulikfluid des anderen, benachrangten Zylinders durch die Steuerventilanordnung sperrt. Dabei sind die Rücklaufleitungen von Wendezylinder und Schwenkzylinder an ein 3/2-Wegeventil angeschlossen, von dem eine gemeinsame Rücklaufleitung zum drucklosen Rücklaufanschluss der Folgesteuerung führt. In der durch eine Druckfeder bestimmten Ruhestellung des 3/2-Wegeventils ist die Rücklaufleitung des bevorrangten Zylinders (z.B. des Schwenkzylinders) durch ein Rückschlagventil im 3/2-Wegeventil gesperrt, während die Rücklaufleitung des zweiten, benachrangten Zylinders (z.B. des Wendezylinders) offen ist. Der durch die Absperrung entstehende Druck in der gesperrten Rücklaufleitung (des Schwenkzylinders) wird durch eine Steuerleitung auf die Gegenseite der Druckfeder geleitet und das 3/2-Wegeventil entgegen der Kraft der Druckfeder geschaltet, wodurch die ursprünglich gesperrte Rücklaufleitung (des Schwenkzylinders) in der Umschaltstellung offen ist und die ursprünglich offene Rücklaufleitung (des Wendezylinders) gesperrt wird. Das 3/2-Wegeventil ist in der Umschaltstellung durch einen Staudruck in der Rücklaufleitung des bevorrangten Zylinders selbsthaltend ausgeführt, wodurch die Umschaltstellung bis zum Abschluss der Bewegung des bevorrangten Zylinders aufrecht bleibt. Durch das Abfallen des Staudrucks am Ende der Bewegung kehrt das 3/2-Wegeventil wieder in die Ruhestellung zurück, wodurch die Rücklaufleitung des benachrangten Zylinders (Wendezylinders) geöffnet wird.

Beiden genannten Pflugsteuerungen ist gemeinsam, dass das Steuerventil zur Umsteuerung der Bewegungsrichtung des Zylinders bzw. der Zylinder durch ein eigenes Folgeventil (Differenzdruckventil) vorgesteuert ist, wodurch der bauliche Aufwand beim Aufbau der Steuerung beträchtlich ist und eine hohe Anzahl von Bauteilen erforderlich ist, und dadurch die Herstellkosten als auch die Fehlermöglichkeiten bei Einstellung und Betrieb der Steuerung noch relativ hoch sind.

Ausgehend von diesem Stand der Technik liegt der Erfindung die Aufgabe zugrunde, eine Pflugsteuervorrichtung für einen Drehpflug ohne oder mit Pflugrahmeneinschwenkung bereitzustellen, die bei gleicher Funktionalität gegenüber dem Stand der Technik einen einfacheren Aufbau aufweist um dadurch die Herstellkosten als auch den Instandhaltungsaufwand zu minimieren sowie die Betriebssicherheit zu verbessern. Eine weitere Aufgabe der Erfindung besteht darin einen Drehpflug mit einer hydraulischen Steuerung bereitzustellen der gegenüber dem Stand der Technik gleiche Funktionalität bei einfacherem Aufbau besitzt.

Die Aufgabe der Erfindung wird durch die im Kennzeichenteil der Ansprüche 1, 2, 13 und 14 wiedergegebenen Maßnahmen und Merkmale gelöst. Die Aufgabe der Erfindung wird mit den gleichen vorteilhaften Effekten auch durch die in den Ansprüchen 12 und 33 enthaltenen Merkmale gelöst. Als vorteilhaft erweist sich, den Differenzdruck zwischen Zuleitung und Staudruck in der Rücklaufleitung des Wendezylinders, durch die beschriebenen Fluidverbindungen, direkt am Steuerkolben des Umsteuerventils zu ermitteln und dadurch die Umschaltfunktion und die Differenzdruckmessung durch ein einziges Ventil zu realisieren. Durch diese Maßnahme kann das gesonderte Differenzdruckventil zur Gänze entfallen und die Anzahl der zum Aufbau der Steuervorrichtung erforderlichen Bauteile sinkt. Dadurch reduzieren sich die Herstellkosten für die Steuervorrichtung durch geringere Fertigungs- und Montagekosten in einem beträchtlichen Ausmaß. Weiters sinkt durch die geringere Anzahl an Bauteilen die Anzahl an möglichen Fehlerquellen, wodurch einerseits die Betriebssicherheit weiter steigt als auch der Instandhaltungs- und Reparaturaufwand durch kürzere Reparaturzeiten und einfachere Ersatzteillagerhaltung geringer wird. Darüber hinaus ist bei der Folgesteuervorrichtung durch die Anordnung zwischen Umsteuerventil und Rücklaufanschluss nur ein Absperrventil für die Vorrangschaltung erforderlich.

Durch die Merkmale der Ansprüche 3 bzw. 15 wirkt der hohe Druck in der Zuleitung des Wendezylinders in der Ruhestellung auf eine erste Wirkfläche, die kleiner ist, als die zweite Wirkfläche auf der gegenüberliegenden Seite des Steuerkolbens, wodurch die auf den Steuerkolben wirkenden Steuerkräfte trotz des in allen Betriebszuständen bestehenden großen Druckunterschieds zwischen den beiden Stirnseiten von ähnlicher Größenordnung sind. Um diesen Flächenunterschied zwischen den beiden gegensinnig wirkenden Wirkflächen zu erreichen, kann der Steuerkolben abgesetzt sein, also zwei unterschiedliche Stirnflächen an den Enden aufweisen oder die in der Ruhestellung dicht am Ventilgehäuse anliegende erste Stirnfläche wird durch eine der Wirkfläche entsprechende Bohrung mit dem Steuerdruck beaufschlagt oder der Steuerkolben wird durch ein Betätigungselement dessen Querschnitt der Wirkfläche entspricht aus der Ruhestellung bewegt. Die zweite Wirkfläche wird vorzugsweise durch die gesamte zweite Stirnfläche des Steuerkolbens gebildet. Der Steuerkolben wirkt in dieser Ausführung in der Ruhestellung nach dem Prinzip eines Druckübersetzers, wonach unterschiedliche Drücke an einem Kolben durch unterschiedlich große Wirkflächen ausgleichbar sind.

Vorteilhaft ist auch die Steuerung gemäß Anspruch 4, wonach die erste Wirkfläche durch ein im Ventilgehäuse des Umsteuerventils integriertes, axial verschiebbares, stiftförmiges Betätigungselement gebildet ist. Dieses Betätigungselement ist an einem freien Ende im Ventilgehäuse mit der Zuleitung zwischen Steuerkolben und Hochdruckanschluss fluidverbunden und überträgt diesen Druck auf den Steuerkolben, wobei das freie Ende gegenüber dem gegenüberliegenden Ende des Betätigungselements in einer axialen Führung abgedichtet ist. Bei der Führung des Betätigungselements im Ventilgehäuse ist es auch möglich, dass das Betätigungselement von einem Teil des Steuerkolbens selbst ausgebildet ist, wodurch wiederum das Prinzip eines Druckübersetzers mit unterschiedlich großen Kolbenflächen angewendet ist.

Vom Prinzip ähnlich wirkt die Ausführung der Folgesteuerung nach Anspruch 16, bei der ein Betätigungselement im Steuerkolben axial verschieblich und abgedichtet gelagert ist und in der Ruhestellung im Inneren des Steuerkolbens mit dem Druck in der Zuleitung beaufschlagt wird, wodurch das Betätigungselement wie ein Kolben axial aus dem Steuerkolben gedrückt wird und den Steuerkolben bei Druckanstieg relativ zum Ventilgehäuse aus der Ruhestellung verschiebt. Die Abdichtung ist mit einem stiftförmigen Betätigungselement durch Dichtringe einfach zu bewerkstelligen und die Anforderungen an die Fertigungsgenauigkeit sind geringer, als z.B. bei der Zusammenpassung eines gestuften Kolbens in einem gestuften Ventilgehäuse.

Die Ausführung der Steuerung nach den Ansprüchen 5 und 17 mit einer auf die zweite Stirnfläche des Steuerkolbens wirkenden, vorgespannten Druckfeder erleichtert den Ausgleich der auf den Steuerkolben wirkenden Kräfte und sorgt weiters im drucklosen Zustand für das zuverlässige Bewegen des Steuerkolbens in die Ruhestellung.

Die Wahl eines Flächenverhältnisses zwischen zweiter Wirkfläche und erster Wirkfläche am Steuerkolben gemäß den Ansprüchen 6 und 18 ergibt bei den von modernen Zugmaschinen bereitgestellten Maximaldrücken von etwa 200 bar bis 250 bar günstige Kraftverhältnisse am Steuerkolben, wodurch speziell in Verbindung mit einer Druckfeder die Schaltstellungen sehr stabil sind und unempfindlich auf schwankende Belastungen beim Wenden des Pfluges.

Die Einstellung des Umschaltdrucks durch die Vorspannung der Druckfeder nach den Ansprüchen 7 und 19 ist vorteilhaft, da zwischen Umschaltdruck und den von Zugmaschinen bereitgestellten Maximaldrücken noch großzügige Druckreserven bestehen und somit eine zuverlässige Umschaltung des Umsteuerventils bei Erreichen des Totpunktes der Wendezylinderbewegung gewährleistet ist.

Durch ein Drosselelement in der Rücklaufleitung zwischen Umsteuerventil und Rücklaufanschluss bzw. in der benachrangbaren Rücklaufleitung vom Wendezylinderkolbenraum bzw. Schwenkzylinderringraum zwischen Umsteuerventil und Rücklaufanschluss wird gemäß den Ansprüchen 8 bzw. 20 der Staudruck beim Rückfluss von Hydraulikfluid in der Rücklaufleitung gegenüber einer Ausführung ohne Drosselelement erhöht, wodurch die auf die zweite Wirkfläche des Steuerkolbens wirkende Druckkraft ebenfalls erhöht wird und die Gefahr eines unvorhergesehenes Umschaltens des Umsteuerventils aus der Ruhestellung auch bei auftretenden Druckspitzen in der Zuleitung zuverlässig verhindert ist, solange durch eine Zylinderbewegung Hydraulikfluid durch die gedrosselte Rücklaufleitung fließt. Als Drosselelement kann beispielsweise eine Blende dienen, wobei der Durchtrittsquerschnitt für das Hydraulikfluid den Drosseleffekt bestimmt und z.B. durch Veränderung des Blendendurchmessers die Höhe des Staudrucks beeinflusst werden kann.

Einen vorteilhaften Effekt bewirkt auch die Ausführung der Steuervorrichtung bzw. Folgesteuervorrichtung gemäß den Ansprüchen 9 bzw. 21, bei der die gesamte erste Stirnfläche in der Umschaltstellung des Steuerkolbens mit der Zuleitung zwischen Steuerkolben und Hochdruckanschluss bzw. mit einer der beiden Leitungen zum Wendzylinderkolbenraum oder zum Schwenkzylinderringraum fluidverbunden ist, wodurch das Umsteuerventil in der geschalteten Stellung aufgrund der großen Druckkraft auf die erste Stirnfläche selbsthaltend ist, bis der Hochdruck in der Zuleitung abgeschaltet wird.

Von Vorteil ist es weiters gemäß den Ansprüchen 10 bzw. 22 in der Leitung zwischen dem Wendezylinderkolbenraum und dem Umsteuerventil ein in Richtung des Umsteuer-Wegeventils sperrendes Rückschlagventil anzuordnen. Dadurch bleiben der Wendezylinder sowie der Pflugrahmen nach Abschluss des Wendevorganges in der zum Pflügen erforderlichen, durch einen mechanischen Anschlag bestimmten, Position mit Hochdruck vorgespannt, auch wenn die Zufuhr von Hydraulikfluid am Hochdruckanschluss unterbrochen wird, da der Abfluss von Hydraulikfluid aus dem Kolbenraum (kolbenseitigen Zylinderraum) des Wendezylinders durch das Rückschlagventil gesperrt ist. Die Hydraulikpumpe der Zugmaschine wird somit nur während des relativ kurzen Wendevorganges durch den Pflug beansprucht.

Um beim Rückschlagventils einen Hydraulikmittelabfluss in Sperrrichtung zu ermöglichen, muss dieses zur Durchführung des Wendevorganges aufgesteuert werden können. Vorteilhaft wird dieses Entsperren bei der Steuervorrichtung bzw. Folgesteuervorrichtung durch einen Aufsteuerkolben bewirkt, der über eine Steuerleitung mit der Leitung zwischen dem Wendezylinderringraum und dem Umsteuerventil fluidverbunden ist und ein Sperrelement im Rückschlagventil aufsteuert. Wird zum Einfahren des Wendezylinders die Leitung zum Wendezylinderringraum unter Hochdruck gesetzt, wird dadurch das Rückschlagventil ohne zusätzlichen baulichen Aufwand für andere Betätigungselemente oder Logikelemente zuverlässig und zu den erforderlichen Zeitpunkten entsperrt.

Die Anordnung eines Drosselrückschlagventils in der Leitung zum Wendezylinderringraum der Steuer- bzw. Folgesteuervorrichtung gemäß den Ansprüchen 11 bzw. 23 bewirkt durch den gedrosselten Hydraulikfluidabfluss, dass die Ausfahrbewegung des Wendezylinders auch trotz der, bei der üblichen Anordnung des Wendezylinders wirkenden Gewichtszugkraft des Pflugrahmens kontrolliert und nicht zu schnell erfolgt. Als Drosselelement kann beispielsweise eine Blende dienen, wobei der Durchtrittsquerschnitt für das Hydraulikfluid den Drosseleffekt bestimmt und z.B. durch Veränderung des Blendendurchmessers die Ausfahrgeschwindigkeit des Wendezylinders eingestellt werden kann. Der mechanische Aufbau des Pfluges wird dadurch geschont, da der Pflugrahmen nicht mit hoher Geschwindigkeit auf den mechanischen Anschlag fällt.

Die Ausführung der Folgesteuervorrichtung nach Anspruch 24 mit einem weiteren Drosselrückschlagventil in der Leitung zum Wendezylinderringraum ermöglicht die Einfahrgeschwindigkeit des Wendezylinders z.B. durch Veränderung des Durchmessers einer Drosselblende zu verändern und einzustellen.

Um eine sichere Fixierung der Schwenkzylinderposition auch bei Unterbrechung der Zufuhr von Hydraulikfluid am Hochdruckanschluss zu gewährleisten, ist es vorteilhaft, gemäß Anspruch 25 in den Leitungen zum Schwenkzylinder ein wechselseitig entsperrbares, in Richtung des Umschaltventils sperrendes Doppelrückschlagventil anzuordnen. Die Entsperrung auf der Rückflussseite erfolgt zweckmäßig mittels eines Aufsteuerkolbens, der bei Beaufschlagung mit Hochruck von der Hochdruckseite, das Sperrelement auf der Niederdruckseite aufsteuert.

Die Ausbildung der Folgesteuervorrichtung mit einem Drosselrückschlagventil in der Leitung zum Schwenkzylinderkolbenraum nach Anspruch 26 ermöglicht es, die Einfahrgeschwindigkeit des Schwenkzylinders und damit des Einschwenkvorganges zu begrenzen, wodurch der mechanische Aufbau des Pfluges geschont wird. Weiters kann die Geschwindigkeit des Einschwenkvorganges durch Veränderung der Drosselwirkung des im Drosselrückschlagventils verändert werden.

Die Weiterbildung der Folgesteuervorrichtung gemäß Anspruch 27 mit einer Verzweigung der Zuleitung zwischen Hochdruckanschluss und Umsteuerventil in eine Wendezylinderzuleitung und eine Schwenkzylinderzuleitung ermöglicht, den Steuerkolben von der Aufgabe der Leitungsverzweigung freizuhalten, da in der Umschaltstellung von der Hochdruckleitung eine Fluidverbindung zu den beiden getrennten Leitungen zum Wendezylinderkolbenraum und zum Schwenkzylinderringraum bestehen muss. Dadurch bleibt im Steuerkolben mehr Platz für die Anordnung des Betätigungselements.

Die Ausführung des Umsteuerventils nach Anspruch 28 als 8/2-Wegeventil ermöglicht einen vergleichsweise einfachen Aufbau und damit eine kostengünstige Herstellung des Steuerkolbens.

Gemäß Anspruch 29 ist es weiters vorteilhaft, im Absperrventil einen zwischen einer durch eine vorgespannte Druckfeder bestimmten Ruhestellung und einer Umschaltstellung verstellbaren Steuerkolben anzuordnen, wodurch die Bevorrangung eines der beiden parallel geschalteten Hydraulikzylinder leicht steuerbar ist, indem die Stirnflächen des Steuerkolbens mit den Steuerkräften beaufschlagt werden. Weiters ist die Ruhestellung des Absperrventils durch die Druckfeder gesichert und über die Vorspannung der Druckfeder die zur Umschaltung erforderliche Druckdifferenz festlegbar.

Von Vorteil ist nach Anspruch 30, im Absperrventil ein Drosselelement im Fließweg der bevorrangbaren Rücklaufleitung anzuordnen, da dadurch während des Abflusses von Hydraulikfluid aus dem bevorrangten Zylinder ein Staudruck entsteht, der bei Stillstand des Zylinders absinkt und somit zur Erkennung des Bewegungszustandes des Zylinders dienen kann.

Durch die Fluidverbindung der in Richtung der Umschaltstellung des Absperrventils wirkenden Stirnfläche des Steuerkolbens mit der bevorrangbaren Rücklaufleitung gemäß Anspruch 31, kann der beim Hydraulikmittelabfluss entstehende Staudruck direkt zur Umschaltung des Absperrventils und damit zur Absperrung der benachrangbaren Rücklaufleitung eingesetzt werden. Es sind somit keine gesonderten Betätigungselemente oder Logikelemente für die Realisierung der Vorrangsschaltung erforderlich.

Durch die Wahl der Druckfedervorspannung gemäß Anspruch 32, wird bewirkt, dass die Umschaltstellung solange aufrecht bleibt, solange der bevorrangte Zylinder seine Endstellung nicht erreicht hat und das Absperrventil während dieser Phase in der Umschaltstellung selbsthaltend ist.

Es zeigen:
- Fig. 1: einen Hydraulikschaltplan der erfindungsgemäßen Steuervorrichtung für einen Drehpflug ohne Pflugrahmeneinschwenkung in vereinfachter Darstellung;
- Fig. 2: einen Hydraulikschaltplan der erfindungsgemäßen Folgesteuervorrichtung für einen Drehpflug mit Pflugrahmeneinschwenkung in vereinfachter Darstellung.
- Fig. 3: eine andere Ausführungsform des Umsteuerventils der Folgesteuervorrichtung in vereinfachter Darstellung

Einführend sei festgehalten, dass in den unterschiedlich beschriebenen Ausführungsformen gleiche Teile mit gleichen Bezugszeichen bzw. Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen Ausführungsbeispielen für sich eigenständige, erfinderische oder erfindungsgemäße Lösungen darstellen.

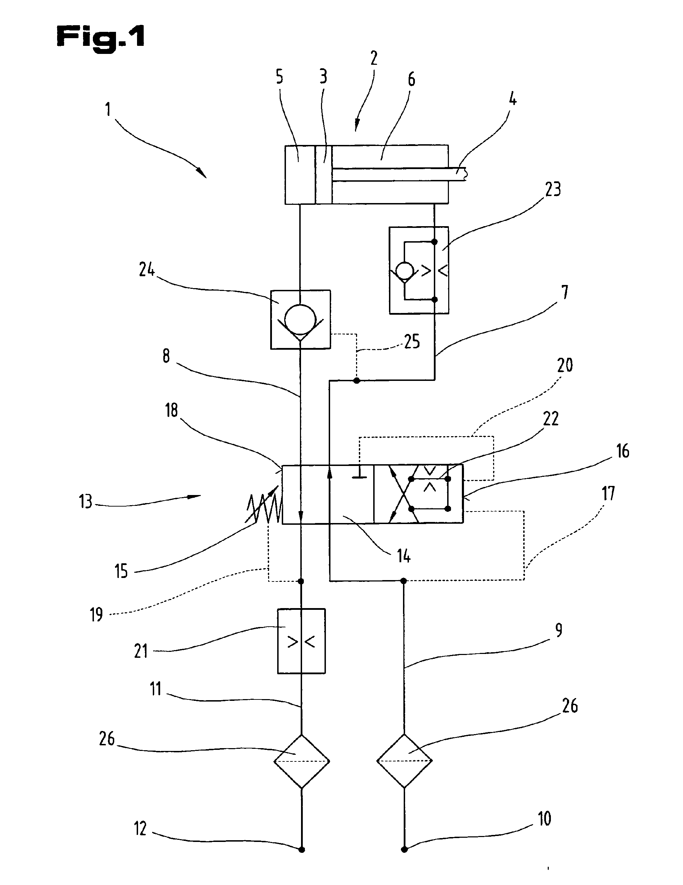

Fig. 1 zeigt den Hydraulikschaltplan einer Ausführungsform einer erfindungsgemäßen Steuervorrichtung 1 für einen hydraulisch betätigbaren Drehpflug ohne Pflugrahmeneinschwenkung. Diese umfasst einen Wendezylinder 2, der als doppelt wirkender Hydraulikzylinder ausgebildet ist, in dem ein Kolben 3 eine abgedichtet aus dem Zylinderraum geführte Kolbenstange 4 bewegt. Der Kolben 3 teilt dabei den Innenraum des Wendezylinders 2 in einen Wendezylinderkolbenraum 5 und einen Wendezylinderringraum 6, die mit Hydraulikfluid, insbesondere Hydrauliköl, gefüllt sind. Die Zufuhr und Abfuhr von Hydraulikfluid zum Wendezylinder 2 erfolgt über eine Leitung 7 zum Wendezylinderringraum 5 sowie eine Leitung 8 zum Wendezylinderkolbenraum 6, wobei die Strömungsrichtung des Hydraulikfluids die Bewegungsrichtung der Kolbenstange 4 bestimmt.

Das freie Ende der Kolbenstange 4 ist drehbar mit einem Anlenkpunkt am Pflugrahmen verbunden, der an einem Hebel auf einer Kreisbahn um die weitgehend horizontale Wendeachse des Pfluges geführt ist, während das gegenüberliegende, kolbenbodenseitige Ende des Wendezylinders 2 in einem Schwenklager am Pflugturm gelagert ist. Der dem Schwenklager nächstgelegene Punkt auf der Kreisbahn des Anlenkpunktes bildet einen Totpunkt für die Einfahrbewegung der Kolbenstange 4 in dem die Bewegungsrichtung der Kolbenstange 4 durch die Steuervorrichtung 1 von Einfahren auf Ausfahren umgeschaltet werden muss, damit die Drehung des Pflugrahmens fortgesetzt wird.

Zur Zufuhr von Hydraulikfluid umfasst die Steuervorrichtung 1 weiters eine Zuleitung 9, die von einem Hochdruckanschluss 10 gespeist wird. An diesen Hochdruckanschluss 10 kann der Bediener des Pfluges durch eine nicht dargestellte Ventilanordnung an der Zugmaschine den zum Betrieb der Steuervorrichtung 1 erforderlichen Druck anlegen, der vom Hydrauliksystem der Zugmaschine bereitgestellt wird. Dieser Versorgungsdruck liegt bei den derzeit gängigen Zugmaschinen in einem Bereich zwischen 200 und 250 bar und ist zum Schutz des Hydrauliksystems durch ein Druckbegrenzungsventil nach oben begrenzt. Der für die Durchführung der Drehbewegung erforderliche Druck beträgt aufgrund der am Pflugrahmen wirkenden Gewichtskräfte etwa 100 bis 140 bar.

Der Rückfluss von Hydraulikfluid von der Steuervorrichtung 1 erfolgt über eine Rücklaufleitung 11 zu einem weitgehend drucklosen Rücklaufanschluss 12, über den das Hydraulikfluid wieder dem Hydrauliksystem der Zugmaschine zugeführt wird.

Zur Steuerung der Bewegungsrichtung der Kolbenstange 4 umfasst die Steuervorrichtung 1 ein Umsteuerventil 13, das zwei Schaltstellungen aufweist. In der Ruhestellung verbindet das Umsteuerventil 13 die Zuleitung 9 mit der Leitung 7 zum Wendezylinderringraum 6 sowie die Leitung 8 vom Wendezylinderkolbenraum 5 mit der Rücklaufleitung 11 wodurch Hydraulikfluid in den Wendezylinderringraum 6 strömen kann und die Kolbenstange 4 des Wendezylinders 2 einfährt. In der Umschaltstellung verbindet das Umsteuerventil 13 die Zuleitung 9 mit der Leitung 8 zum Wendezylinderkolbenraum 5 sowie die Leitung 7 vom Wendezylinderringraum 6 mit der Rücklaufleitung 11 wodurch Hydraulikfluid in den Wendezylinderkolbenraum 5 strömen kann und die Kolbenstange 4 des Wendezylinders 2 ausfährt.

Das Umsteuerventil 13 ist vorzugsweise als Längsschieberventil ausgebildet und umfasst einen Steuerkolben 14 der in einer Bohrung im Ventilgehäuse axial zwischen einer Ruhestellung und einer Umschaltstellung verschieblich gelagert ist und mit Eindrehungen je nach seiner Stellung Fließwege zwischen den jeweils zu verbindenden Leitungen freigibt oder Leitungen absperrt. Die Ruhestellung des Steuerkolbens 14 wird durch eine zwischen Ventilgehäuse und Steuerkolben 14 angeordnete, vorgespannte Druckfeder 15 bestimmt, die den Steuerkolben 13 im drucklosen Zustand der Steuervorrichtung 1 in die Ruhestellung drückt.

Die Bewegung des Steuerkolbens 14 zwischen Ruhestellung und Umschaltstellung wird durch folgende axiale Steuerkräfte bewirkt, die in den verschiedenen Betriebszuständen auf den Steuerkolben 14 wirken.

Eine erste Steuerkraft wirkt gegensinnig zur Druckfeder 15 in Richtung der Umschaltstellung, indem eine erste Wirkfläche 16 des Steuerkolbens 15 mit dem Druck in der Zuleitung 9 beaufschlagt wird. Als Wirkfläche 16 kann eine erste Stirnfläche des Steuerkolbens 14 dienen, die teilweise oder zur Gänze den vom Hydraulikfluid ausgeübten Druck aufnimmt. Die teilweise Beaufschlagung kann beispielsweise dadurch realisiert werden, dass die in der Ruhestellung dicht am Ventilgehäuse anliegende erste Stirnfläche durch eine der Wirkfläche 16 entsprechende Bohrung im Ventilgehäuse mit dem Steuerdruck beaufschlagt wird. Der Druck kann aber auch durch ein eigenes Betätigungselement auf den Steuerkolben 14 übertragen werden, indem dieses an einem, die Wirkfläche 16 bildende, Ende mit dem Druck in der Zuleitung 9 beaufschlagt wird und mit dem anderen Ende am Steuerkolben 14 anliegt und auf die erste Stirnfläche drückt. Die Übertragung des Drucks in der Zuleitung 9 auf die erste Wirkfläche 16 erfolgt dabei durch eine Steuerleitung 17. Das Betätigungselement ist in diesem Fall in einer Bohrung im Ventilgehäuse axial verschieblich gelagert und die beiden gegenüberliegenden Enden sind zueinander mit einer Bewegungsdichtung abgedichtet und die Steuerleitung 17 führt zur ersten Wirkfläche 16 im Ventilgehäuse.

Eine zweite Steuerkraft wirkt gleichsinnig mit der Druckfeder 15 in Richtung der Ruhestellung, indem eine zweite Wirkfläche 18 des Steuerkolbens 14 mit dem Druck in der Rücklaufleitung 11 beaufschlagt wird. Als zweite Wirkfläche 18 kann eine zweite Stirnfläche des Steuerkolbens 14 dienen oder wieder ein Betätigungselement, das den Druck in der Rücklaufleitung 11 auf den Steuerkolben 14 überträgt. Die Übertragung des Drucks in der Rücklaufleitung 11 auf die zweite Wirkfläche 18 erfolgt dabei durch eine Steuerleitung 19.

Eine dritte Steuerkraft wirkt gegensinnig zur Druckfeder 15 in Richtung der Umschaltstellung und zwar ausschließlich in der Umschaltstellung, indem die erste Stirnfläche oder der nicht vom Betätigungselement abgedeckte Teil der Stirnfläche des Steuerkolbens 14 vollständig mit dem Druck in der Zuleitung 9 beaufschlagt wird. Dazu wird vom Umschaltventil 13 in der Umschaltstellung eine zur ersten Stirnfläche führende Steuerleitung 20 mit der Zuleitung 9 verbunden.

Das Zusammenwirken dieser Kräfte im Umsteuerventil 13, die während des Pflugwendevorganges das selbständige Umschalten der Bewegungsrichtung der Kolbenstange 4 beim Erreichen des Totpunkts bewirken, wird im Folgenden beschrieben.

Ausgangsstellung ist die ausgefahrene Kolbenstange 4 des Wendezylinders 2, die den Pflugrahmen in die Arbeitsposition drückt. Der Bediener leitet zum Durchführen eines Wendevorganges über ein Bedienventil an der Zugmaschine Hochdruck auf den Hochdruckanschluss 10 der Steuervorrichtung 1, der bis zum Abschluss des Wendeganges aufrechterhalten bleiben muss. Über die Zuleitung 9 gelangt das unter Hochdruck stehende Hydraulikfluid zum in Ruhestellung befindlichen Umsteuerventil 13 und durch einen vom Steuerkolben 14 freigegebenen Fließweg über die Leitung 7 zum Wendezylinderringraum 6. Der Druck in der Zuleitung 9 beträgt dabei etwa zwischen 100 und 140 bar. Durch diesen Druck wird die Kolbenstange 4 eingefahren und der Pflugrahmen aus der Arbeitsstellung in eine Drehbewegung versetzt. Dabei wird Hydraulikfluid aus dem Wendezylinderkolbenraum 5 verdrängt, welches über die Leitung 8, über einen Fließweg im Umsteuerventil 13 und die Rücklaufleitung 11 zum Rücklaufanschluss 10 und von dort in den Rücklaufbehälter des Hydrauliksystems in der Zugmaschine strömt. In dieser Phase wirken auf den Steuerkolben 14 in Richtung der Umschaltstellung die erste Steuerkraft auf die erste Wirkfläche 16 durch den Druck von etwa 100 bis 140 bar in der Zuleitung 9 sowie in Richtung der Ruhestellung die Steuerkraft auf die zweite Wirkfläche 18 durch den Druck in der Rücklaufleitung 11 sowie die Vorspannkraft der Druckfeder 15, die so gewählt ist, dass sie erst bei einem Differenzdruck zwischen erster Wirkfläche 16 und zweiter Wirkfläche 18 von über 150 bar überwunden wird. Die Höhe der erforderlichen Vorspannkraft ist deshalb auch von der Größe der ersten Wirkfläche 16 direkt abhängig, bei den in dieser Drehphase auftretenden Drücken von etwa 100 bis 140 bar wird der Steuerkolben 14 durch die Druckfeder 15 in der Ruhestellung fixiert. Zusätzlich wirkt gleichsinnig mit der Druckfederkraft auf die zweite Wirkfläche 18 der geringe Druck in der Rücklaufleitung 11, der einem unbeabsichtigten Umschalten in dieser Drehphase z.B. durch Druckschwankungen in der Zulaufleitung entgegenwirkt. Durch den Einbau eines Drosselelements 21 in die Rücklaufleitung 11 wird der Strömungswiderstand in der Rücklaufleitung 11 erhöht und es bildet sich ein Staudruck, der höher ist als der Druck ohne Drosselelement 21 wodurch die zweite Steuerkraft auf die zweite Wirkfläche 18 erhöht wird und die Ruhestellung des Steuerkolbens 14 zusätzlich abgesichert wird.

Da die Größe der beiden Wirkflächen 16 und 18 die sich ergebenden Steuerkräfte direkt beeinflusst, kann über das Verhältnis dieser Flächen das Umschaltverhalten des Umsteuerventils 13 positiv beeinflusst werden. Insbesondere durch eine Verkleinerung der ersten Wirkfläche 16 gegenüber der zweiten Wirkfläche 18 kann die auf die erste Wirkfläche 16 wirkende erste Steuerkraft verringert werden und damit die erforderliche Vorspannkraft der Druckfeder 15 reduziert werden, was eine Erleichterung für die bauliche Ausführung und die Montage bewirkt. Bei einem entsprechend großen Flächenverhältnis zwischen zweiter Wirkfläche 18 und erster Wirkfläche 16 kann der Staudruck in der Rücklaufleitung 11 alleine ausreichen, den Steuerkolben 14 entgegen der ersten Steuerkraft auch ohne Druckfeder 15 in der Ruhestellung zu halten. In der Praxis hat sich jedoch ein Flächenverhältnis ausgewählt aus einem Bereich mit einer unteren Grenze von 10, insbesondere 20, vorzugsweise 25 und einer oberen Grenze von 50, insbesondere 40, vorzugsweise 30 als vorteilhaft erwiesen, da sich dadurch kompakte aber trotzdem relativ leicht zu fertigende Bauteilgrößen ergeben. Die unterschiedlichen Größen der Wirkflächen 16 und 18 können durch unterschiedlich große Stirnflächen realisiert sein, weiters durch gleich große Stirnflächen, wobei in der Ruhestellung der Steuerdruck nur auf einen Teil der jeweiligen Stirnfläche wirkt oder durch ein jeweils auf eine Stirnfläche drückendes Betätigungselement mit der entsprechenden Wirkfläche.

Die Einfahrbewegung des Wendezylinders 2 dauert an, bis der Anlenkpunkt auf seiner vorgegebenen Kreisbahn den Totpunkt erreicht und die Bewegung der Kolbenstange 4 zum Stillstand kommt. Der Zufluss und der Rückfluss von Hydraulikfluid zum Wendezylinder 2 kommt dadurch ebenfalls zum Stillstand wodurch einerseits der Druck in der Zuleitung 9 stark ansteigt und andererseits der Staudruck in der Rücklaufleitung 11 vollständig zusammenbricht. Die auf die erste Wirkfläche 16 wirkende erste Steuerkraft nimmt stark zu während die auf die zweite Wirkfläche 18 wirkende zweite Steuerkraft auf Null absinkt. In dem Moment, in dem die erste Steuerkraft größer wird, als die Vorspannkraft der Druckfeder 15, wird der Steuerkolben 14 entgegen der Druckfederkraft aus der Ruhestellung in die Umschaltstellung gedrückt, ein Fließweg für das Hydraulikfluid von der Zuleitung 9 zur Leitung 8 zum Wendezylinderkolbenraum 5 und ein Fließweg von der Leitung 7 zum Wendezylinderringraum 6 zur Rücklaufleitung 11 geöffnet und somit die Bewegungsrichtung der Kolbenstange 4 von einer Einfahrbewegung in eine Ausfahrbewegung umgekehrt. Dabei sorgt die Massenträgheit des Pflugrahmens dafür, dass die Drehbewegung über den Totpunkt hinaus fortgesetzt wird und nicht nach der ersten Phase der Drehbewegung wieder umgekehrt wird.

In der Umschaltstellung wirken auf den Steuerkolben 14 in Richtung der Ruhestellung die Kraft der Druckfeder 15 und die zweite Steuerkraft durch den Druck in der Rücklaufleitung 11 auf die zweite Wirkfläche 18. In Richtung der Umschaltstellung wirkt im Fall, dass ein Betätigungselement noch auf die erste Stirnfläche drückt die erste Steuerkraft durch den Druck in der Zuleitung 9 auf die erste Wirkfläche 16 des Betätigungselements und die dritte Steuerkraft, die vom über die Steuerleitung 20 übertragenen Druck in der Leitung 8 zum Wendezylinderkolbenraum 5 auf den nicht durch ein Betätigungselement abgedeckten Teil der ersten Stirnfläche bewirkt wird. Durch die Höhe der dritten Steuerkraft wird der Steuerkolben 14 entgegen der Druckfederkraft sicher in der Umschaltstellung gehalten.

Das Ende der Ausfahrbewegung der Kolbenstange 4 wird durch einen festen Anschlag bestimmt, durch den eine weitere Bewegung des Anlenkpunkts oder des Pflugrahmens blockiert wird und die zweite, gedrehte Arbeitsposition des Pflugrahmens festgelegt ist. Ist diese Position erreicht und der Wendevorgang damit vollständig abgeschlossen, unterbricht der Bediener der Zugmaschine die Zufuhr von Hydraulikfluid am Hochdruckanschluss 10 sowie den Rückfluss von Hydraulikfluid vom Rücklaufanschluss 12. Durch geringe Leckströme im Umsteuerventil 13 gleichen sich die unterschiedlichen Drücke zwischen den beiden Stirnseiten des Steuerkolbens 14 nach kurzer Zeit aus und die Druckfeder 15 drückt den Steuerkolben 14 wieder zurück in die Ruhestellung, wodurch wieder die Ausgangsstellung der Steuervorrichtung 1 hergestellt ist. Um diesen Druckausgleich zu beschleunigen, kann im Umsteuerventil 13 auch ein gedrosselter Druckausgleichskanal 22 vorgesehen sein, der in der Umschaltstellung die Hochdruckseite und die Niederdruckseite verbindet.

Die Steuervorrichtung 1 umfasst weiters in der Leitung 7 zum Wendezylinderringraum ein in Richtung des Umsteuerventils 13 drosselndes Drosselrückschlagventil 23 mit einer Drosselblende, die den Rücklauf von Hydraulikfluid aus dem Wendezylinderringraum 6 drosselt und dadurch die Ausfahrgeschwindigkeit der Kolbenstange 4 verlangsamt. Dadurch wird auch die Geschwindigkeit, mit der der Pflugrahmen gegen den die Arbeitsposition bestimmenden Anschlag fährt, reduziert und der mechanische Aufbau des Pfluges geschont. Durch die Wahl des Drosselblendendurchmessers kann diese Geschwindigkeit leicht an die Erfordernisse unterschiedlicher Pfluggrößen angepasst werden.

In der Leitung 8 vom Wendezylinderkolbenraum 5 zum Umsteuerventil 13 ist ein in Richtung des Umsteuerventils sperrendes Rückschlagventil 24 angeordnet, das durch den Druck in der Leitung 7 zum Wendezylinderringraum 6 entsperrt werden kann. Zum Entsperren enthält das Rückschlagventil 24 einen auf ein im Rückschlagventil 24 enthaltenes Sperrelement wirkenden Aufsteuerkolben, der über eine Steuerleitung 25 mit der Leitung 7 zum Wendezylinderringraum 6 fluidverbunden ist. Eine am Aufsteuerkolben wirksame Druckfläche ist dabei größer als eine am Sperrelement in Sperrrichtung wirksame Druckfläche, wodurch das Rückschlagventil bei anliegendem Hochdruck in der Leitung 7 zum Wendezylinderringraum 6 zuverlässig entsperrt wird und das im Wendezylinderkolbenraum 5 verdrängte Hydraulikfluid abfließen kann. Der Vorteil durch die Anordnung des Rückschlagventils 24 besteht darin, dass ein Abfluss von Hydraulikfluid aus dem Wendezylinderkolbenraum 5 nur bei Hochdruck in der Leitung 7 möglich ist, also während der Durchführung eines Wendevorganges und dass nach Abschluss des Wendevorganges der Wendezylinderkolbenraum 5 abgesperrt ist, wodurch der Pflugrahmen während des Betriebes auch ohne Hydraulikmittelzufuhr am Hochdruckanschluss 10 in der Arbeitsposition gehalten wird.

Zum Schutz vor festen Fremdkörpern, die über die Anschlüsse in die Steuervorrichtung eindringen können, sind in der Zuleitung 9 und der Rücklaufleitung 11 vorzugsweise möglichst nahe am Hochdruckanschluss 10 bzw. Rücklaufanschluss 12 Siebelemente 26 angeordnet.

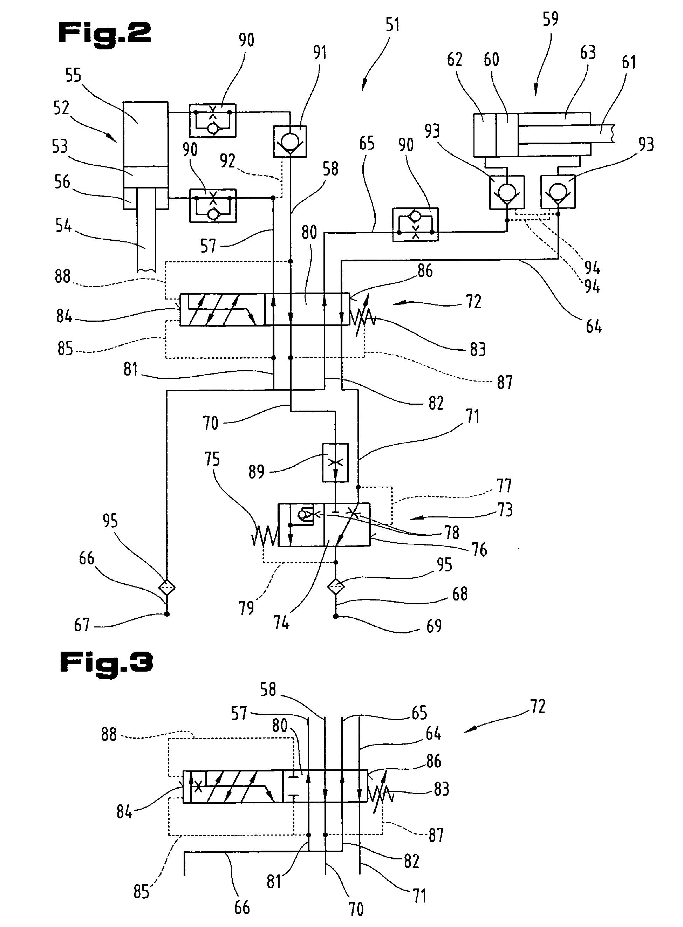

Fig. 2 zeigt den Hydraulikschaltplan einer Ausführungsform einer erfindungsgemäßen Folgesteuervorrichtung 51 für einen hydraulisch betätigbaren Drehpflug mit Pflugrahmeneinschwenkung. Diese umfasst einen Wendezylinder 52, der als doppelt wirkender Hydraulikzylinder ausgebildet ist, in dem ein Kolben 53 eine abgedichtet aus dem Zylinderraum geführte Kolbenstange 54 bewegt. Der Kolben 53 teilt dabei den Innenraum des Wendezylinders 52 in einen Wendezylinderkolbenraum 55 und einen Wendezylinderringraum 56, die mit Hydraulikfluid, insbesondere Hydrauliköl, gefüllt sind. Die Zufuhr und Abfuhr von Hydraulikfluid zum Wendezylinder 52 erfolgt über eine Leitung 57 zum Wendezylinderringraum 55 sowie eine Leitung 58 zum Wendezylinderkolbenraum 56, wobei die Strömungsrichtung des Hydraulikfluids die Bewegungsrichtung der Kolbenstange 54 bestimmt.

Die Wirkungsweise und die Anordnung des Wendezylinders 52 am Drehpflug entspricht dem Wendezylinder 2 bei der Steuervorrichtung 1 für den Drehpflug ohne Pflugrahmeneinschwenkung und wird an dieser Stelle nicht näher beschrieben.

Weiters umfasst die Folgesteuervorrichtung 51 einen Schwenkzylinder 59, der ebenfalls als doppelt wirkender Hydraulikzylinder ausgebildet ist, in dem ein Kolben 60 eine abgedichtet aus dem Zylinderraum geführte Kolbenstange 61 bewegt. Der Kolben 60 teilt dabei den Innenraum des Schwenkzylinders 59 in einen Schwenkzylinderkolbenraum 62 und einen Schwenkzylinderringraum 63, die mit Hydraulikfluid, insbesondere Hydrauliköl, gefüllt sind. Die Zufuhr und Abfuhr von Hydraulikfluid zum Schwenkzylinder 59 erfolgt über eine Leitung 64 zum Schwenkzylinderringraum 63 sowie eine Leitung 65 zum Schwenkzylinderkolbenraum 62, wobei die Strömungsrichtung des Hydraulikfluids die Bewegungsrichtung der Kolbenstange 61 bestimmt.

Der Schwenkzylinder 59 bringt den Pflugrahmen zur Durchführung des Wendevorganges in eine Lage nahe zur Drehachse des Drehpfluges und schwenkt diesen anschließend wieder in Arbeitsposition. Dies ist vor allem bei großen Pflügen mit mehreren Scharen und dementsprechend hohem Gewicht erforderlich, um einerseits die Drehung ohne Kollision mit dem Erdreich durchführen zu können und andererseits die für die Drehung erforderlichen Kräfte durch Annäherung des Pflugrahmenschwerpunkts an die Drehachse zu reduzieren.

Zur Zufuhr von Hydraulikfluid umfasst die Folgesteuervorrichtung 51 weiters eine Zuleitung 66, die von einem Hochdruckanschluss 67, der mit dem Hochdruckanschluss 10 der Steuervorrichtung für den Drehpflug ohne Pflugrahmeneinschwenkung identisch ist, mit einem Versorgungsdruck von maximal 200 bis 250 bar gespeist wird. Der während der Durchführung der Drehbewegung erforderliche Druck beträgt aufgrund der am Pflugrahmen wirkenden Gewichtskräfte etwa 100 bis 140 bar.

Der Rückfluss von Hydraulikfluid von der Folgesteuervorrichtung 51 erfolgt über eine Rücklaufleitung 68 zu einem weitgehend drucklosen Rücklaufanschluss 69, über den das Hydraulikfluid wieder dem Hydrauliksystem der Zugmaschine zugeführt wird. Die Rücklaufleitung 68 ist die Vereinigung einer benachrangbaren Rücklaufleitung 70 und einer bevorrangbaren Rücklaufleitung 71, deren Zweck später noch dargelegt wird.

Zur Steuerung der Bewegungsrichtung der Kolbenstangen 54 und 61 umfasst die Folgesteuervorrichtung 51 ein Umsteuerventil 72, das zwei Schaltstellungen aufweist. In der Ruhestellung verbindet das Umsteuerventil 72 die Zuleitung 66 mit der Leitung 57 zum Wendezylinderringraum 56 und der Leitung 65 zum Schwenkzylinderkolbenraum 62 sowie die Leitung 58 vom Wendezylinderkolbenraum 55 mit der benachrangbaren Rücklaufleitung 70 und die Leitung 64 vom Schwenkzylinderringraum 63 mit der bevorrangbaren Rücklaufleitung 71 wodurch Hydraulikfluid in den Wendezylinderringraum 56 und den Schwenkzylinderkolbenraum 62 strömen kann. Dies bewirkt die Einfahrbewegung des Wendezylinders 52 bzw. die Ausfahrbewegung des Schwenkzylinders 59.

In der Umschaltstellung verbindet das Umsteuerventil 72 die Zuleitung 9 mit der Leitung 58 zum Wendezylinderkolbenraum 55 und der Leitung zum Schwenkzylinderringraum 63 sowie die Leitung 57 vom Wendezylinderringraum 56 mit der bevorrangbaren Rücklaufleitung 71 und die Leitung 65 vom Schwenkzylinderkolbenraum 62 mit der benachrangbaren Rücklaufleitung 70, wodurch Hydraulikfluid in den Wendezylinderkolbenraum 55 und den Schwenkzylinderringraum 63 strömen kann. Dies bewirkt die Ausfahrbewegung des Wendezylinders 52 bzw. die Einfahrbewegung des Schwenkzylinders 59.

Da die Bewegungen von Wendezylinder 52 und Schwenkzylinder 59 jedoch in der Ruhestellung als auch in der Umschaltstellung des Umsteuerventils 72 zeitlich hintereinander ablaufen müssen, umfasst die Folgesteuervorrichtung 51 weiters ein Absperrventil 73, das die benachrangbare Rücklaufleitung 70 absperrt solange durch die bevorrangbare Rücklaufleitung 71 Hydraulikmittel abfließt.

Im Absperrventil 73 ist in einem Ventilgehäuse ein zwischen einer Ruhestellung und einer Umschaltstellung verstellbarer Steuerkolben 74 angeordnet, der in der Ruhestellung (in Fig. 2 dargestellt) jeweils einen Fließweg für die benachrangbare Rücklaufleitung 70 und die bevorrangbare Rücklaufleitung 71 zur gemeinsamen Rücklaufleitung 68 freigibt und in der Umschaltstellung die benachrangbare Rücklaufleitung 70 absperrt sowie einen Fließweg von der bevorrangbaren Rücklaufleitung 71 zur gemeinsamen Rücklaufleitung 68 freigibt.

Zwischen dem Ventilgehäuse des Absperrventils 73 und dem Steuerkolben 74 ist eine vorgespannte Druckfeder 75 angeordnet, die den Steuerkolben 74 in Richtung der Ruhestellung drückt. Um das Absperren der benachrangbaren Rücklaufleitung 7 durch Bewegen des Steuerkolbens 74 in die Umschaltstellung bewirken zu können, ist eine gegenüber der Druckfeder 75 liegende Steuerfläche 76 über eine Steuerleitung 77 mit der bevorrangbaren Rücklaufleitung 71 fluidverbunden, wodurch die Steuerfläche 76 mit dem Druck in der bevorrangbaren Rücklaufleitung 71 beaufschlagt ist. Um die daraus resultierende Steuerkraft über die Vorspannkraft der Druckfeder 75 anzuheben, ist im Absperrventil 73 ein Drosselelement 78 angeordnet, das durch seinen Strömungswiderstand einen Staudruck in der bevorrangbaren Rücklaufleitung 71 bewirkt, und die Steuerkraft über die Vorspannkraft der Druckfeder 75 anhebt, solange ein Hydraulikmittelabfluss in der bevorrangbaren Rücklaufleitung 71 stattfindet. Weiters ist die auf der Seite der Druckfeder 75 liegende Stirnfläche des Steuerkolbens 74 über eine Leitung 79 mit der weitgehend drucklosen Rücklaufleitung 68 fluidverbunden, wodurch eine axiale Druckentlastung für den Steuerkolben 74 erreicht wird und die Steuerkraft ausschließlich gegen die Druckfederkraft wirkt.

Das Umsteuerventil 72 umfasst einen in einem Ventilgehäuse zwischen einer Ruhestellung und einer Umschaltstellung verstellbaren Steuerkolben 80, der je nach seiner Stellung die Fließwege zwischen der Zuleitung 66, den Rücklaufleitungen 70, 71 und den Leitungen 57, 58, 64, 65 freigibt. Die bauliche Realisierung kann z.B. in der an sich bekannten Weise erfolgen, dass durch Eindrehungen am Steuerkolben jeweils zwei nebeneinander liegende Ringnuten im Ventilgehäuse, in die die Leitungen münden, miteinander verbunden werden. Um den Steuerkolben 80 baulich einfach zu halten kann, wie in Fig. 2 dargestellt die Zuleitung 66 in eine Wendezylinderzuleitung 81 und eine Schwenkzylinderzuleitung 82 verzweigt sein, wodurch insgesamt acht Förderleitungen am Umschaltventil angeschlossen sind und dieses somit durch ein 8/2-Wegeventil gebildet ist, wobei für Steuerleitungen zusätzliche Anschlussstellen ausgebildet sein können.

Zwischen dem Ventilgehäuse und dem Steuerkolben 80 ist im Umsteuerventil 72 eine vorgespannte Druckfeder 83 angeordnet, die den Steuerkolben 80 in Richtung der Ruhestellung drückt. Zusätzlich wirken axiale Steuerkräfte, die die Position - Ruhestellung oder Umschaltstellung - des Steuerkolbens 80 bestimmen.

Eine erste Steuerkraft wirkt gegensinnig zur Druckfeder 83 in Richtung der Umschaltstellung, indem eine erste Wirkfläche 84 des Steuerkolbens 80 über eine Steuerleitung 85 mit dem Druck in der Zuleitung 66, der Wendezylinderzuleitung 81 oder der Schwenkzylinderzuleitung 82 beaufschlagt wird. Als Wirkfläche 84 kann eine erste Stirnfläche des Steuerkolbens 80 dienen, die teilweise oder zur Gänze den vom Hydraulikfluid ausgeübten Druck aufnimmt. Die teilweise Beaufschlagung kann beispielsweise dadurch realisiert werden, dass die in der Ruhestellung dicht am Ventilgehäuse anliegende erste Stirnfläche durch eine der Wirkfläche 84 entsprechende Bohrung im Ventilgehäuse mit dem Steuerdruck beaufschlagt wird. Der Druck kann aber auch durch ein eigenes Betätigungselement auf den Steuerkolben 80 übertragen werden, indem dieses im Steuerkolben 80 axial verschiebbar gelagert ist, durch Druck axial aus dem Steuerkolben 80 herausgedrückt werden kann und sich am Ventilgehäuse abstützt oder im Ventilgehäuse axial verschiebbar gelagert ist, durch Druck aus dem Ventilgehäuse herausgedrückt werden kann und dabei den Steuerkolben 80 verschiebt. Die Übertragung des Drucks in der Zuleitung 9 auf die erste Wirkfläche 16 erfolgt dabei durch eine radiale Bohrung, die der Steuerleitung 85 entspricht, von einer Eindrehung im Steuerkolben 80 auf die Stirnfläche des im Steuerkolben 80 verschieblich gelagerten Betätigungselements oder durch eine Steuerleitung 85 von der Zuleitung 66 zu einer Stirnfläche des in einer Bohrung im Ventilgehäuse axial geführten Betätigungselements. Die beiden gegenüberliegenden Enden des Betätigungselements sind in beiden Bauarten zueinander mit einer Bewegungsdichtung abgedichtet.

Eine zweite Steuerkraft wirkt gleichsinnig mit der Druckfeder 83 in Richtung der Ruhestellung, indem eine zweite Wirkfläche 86 des Steuerkolbens 80 mit dem Druck in der benachrangbaren Rücklaufleitung 70 beaufschlagt wird. Als zweite Wirkfläche 86 kann eine zweite Stirnfläche des Steuerkolbens 80 dienen oder wieder ein Betätigungselement, das den Druck in der benachrangbaren Rücklaufleitung 70 auf den Steuerkolben 80 überträgt. Die Übertragung des Drucks in der benachrangbaren Rücklaufleitung 70 auf die zweite Wirkfläche 86 erfolgt dabei durch eine Steuerleitung 87.

Eine dritte Steuerkraft wirkt gegensinnig zur Druckfeder 83 in Richtung der Umschaltstellung und zwar ausschließlich in der Umschaltstellung, indem die erste Stirnfläche zur Gänze oder der nicht vom Betätigungselement abgedeckte Teil der Stirnfläche des Steuerkolbens 80 vollständig mit dem Druck in der Leitung 58 zum Wendezylinderkolbenraum 55 beaufschlagt wird. Dazu führt eine Steuerleitung 88 von der Leitung 58 zur ersten Stirnfläche des Steuerkolbens 80, wobei ein Fließweg von der Steuerleitung 88 zur ersten Stirnfläche erst in der Umschaltstellung freigegeben ist z.B. indem die Einmündung der Steuerleitung 88 in den Kolbenraum in der Ruhestellung vom Steuerkolben 88 verschlossen ist und der Steuerdruck in der Steuerleitung 88 in der Ruhestellung nicht auf die erste Stirnfläche wirken kann. Da in der Umschaltstellung der Druck in der Leitung 58 identisch ist mit dem Druck in der Zuleitung 66, kann die Steuerleitung 88 in diesem Fall auch von der Zuleitung 66 abzweigen. Alternativ kann die Steuerleitung 88 am Umsteuerventil 72 angeschlossen sein, und der Steuerkolben 80 in der Umschaltstellung einen Fließweg von der Zuleitung 66 oder einer der Leitungen 81 oder 82 zur Steuerleitung 88 freigeben, wodurch der Steuerdruck erst in der Umschaltstellung in die Steuerleitung 88 gelangt und die dritte Steuerkraft auf die erste Stirnfläche ausüben kann.

Für die Größe der beiden Wirkflächen 84 und 86 am Steuerkolben 80 gelten dieselben Zusammenhänge wie bereits bei den Wirkflächen 16 und 18 der Steuervorrichtung 1 für den Drehpflug ohne Pflugrahmeneinschwenkung beschrieben, wobei sich in der Praxis auch für die Folgesteuervorrichtung 51 ein Flächenverhältnis von zweiter Wirkfläche 86 zu erster Wirkfläche 84 ein Wert ausgewählt aus einem Bereich mit einer unteren Grenze von 10, insbesondere 20, vorzugsweise 25 und einer oberen Grenze von 50, insbesondere 40, vorzugsweise 30 als vorteilhaft erwiesen hat.

Das Zusammenwirken der Steuerkräfte im Umsteuerventil 72, die während des Pflugwendevorganges das selbständige Umkehren der Bewegungsrichtungen der Kolbenstangen 54 und 61 bewirken sowie die Funktion des Absperrventils 73 in den vier Bewegungsphasen des Pflugrahmens - Einschwenken, erste Teildrehung, zweite Teildrehung und Ausschwenken - werden im folgenden beschrieben.

Ausgangsstellung der ersten Phase ist die ausgefahrene Kolbenstange 54 des Wendezylinders 52, die den Pflugrahmen in die Arbeitsposition drückt und die eingefahrene Kolbenstange 61 des Schwenkzylinders 59, die den Pflugrahmen in der ausgeschwenkten, drehachsenfernen Arbeitsstellung hält. Der Bediener leitet zum Durchführen eines Wendevorganges über ein Bedienventil an der Zugmaschine Hochdruck auf den Hochdruckanschluss 67 der Folgesteuervorrichtung 51, der bis zum Abschluss des Wende- und Schwenkvorganges aufrechterhalten bleiben muss. Über die Zuleitung 66, die Wendezylinderzuleitung 81 und die Schwenkzylinderzuleitung 82 gelangt das unter Hochdruck stehende Hydraulikfluid zum in Ruhestellung befindlichen Umsteuerventil 83, von dort jeweils durch einen vom Steuerkolben 80 freigegebenen Fließweg über die Leitung 57 zum Wendezylinderringraum 56 und über die Leitung 65 zum Schwenkzylinderkolbenraum 62. Der Druck in der Zuleitung 66 beträgt dabei etwa zwischen 100 und 140 bar. Die beiden parallel geschalteten Zylinder könnten sich nun gleichzeitig in Bewegung setzen und dabei Hydraulikfluid über die Leitungen 58 und 64, über freigegebene Fließwege im Umsteuerventil 72, die benachrangbare Rücklaufleitung 70 und die bevorrangbare Rücklaufleitung 71 über das in Ruhestellung befindliche Absperrventil 73 zum Rücklaufanschluss 69 verdrängen. Durch das Drosselelement 78 im Absperrventil 72 baut sich jedoch sofort ein Staudruck in der bevorrangbaren Rücklaufleitung 71 auf, der über die Steuerleitung 77 auf die Steuerfläche 76 geleitet wird, wodurch der Steuerkolben 72 im Absperrventil entgegen der Kraft der Druckfeder 75 in die Umschaltstellung gedrückt wird, in der die benachrangbare Rücklaufleitung 70 abgesperrt wird. Dadurch wird der Rückfluss von Hydraulikfluid vom Wendezylinderkolbenraum 55 blockiert während der Rückfluss von Hydraulikfluid vom Schwenkzylinderringraum 63 unverändert möglich ist. Die Kolbenstange 61 des Schwenkzylinders 59 fährt aus und bringt den Schwerpunkt des Pflugrahmens in eine Lage nahe der Drehachse der Pflugwendung wogegen der Wendezylinder 52 in dieser Phase blockiert ist. Im Umsteuerventil 72 bleibt der Steuerkolben 80 in der Ruhestellung, weil die Vorspannkraft der Druckfeder 85 und die gleichsinnig wirkende zweite Steuerkraft in Summe größer sind, als die vom Druck in der Wendezylinderzuleitung 81 auf die erste Wirkfläche 84 in Richtung der Umschaltstellung ausgeübte erste Steuerkraft.

Der Übergang zur zweiten Phase mit der ersten Teildrehung des Pflugrahmens erfolgt, wenn der Schwenkzylinder 59 beim Ausfahren seine Endstellung erreicht wodurch der Hydraulikmittelabfluss aus dem Schwenkzylinderringraum 63 endet und der auf die Steuerfläche 76 wirkende Staudruck in der bevorrangbaren Rücklaufleitung 71 zusammenbricht. Dadurch wird der Steuerkolben 74 durch die Druckfeder 75 in die Ruhestellung gedrückt, in der der Fließweg von der benachrangbaren Rücklaufleitung 70 zur gemeinsamen Rücklaufleitung 68 wieder freigegeben ist. Folglich ist der Abfluss von Hydraulikfluid aus dem Wendezylinderkolbenraum 55 möglich, die Kolbenstange 54 des Wendezylinders 52 fährt ein und dreht den vom ausgefahrenen Schwenkzylinder 59 in eingeschwenkter Stellung gehaltenen Pflugrahmen.

Im Umsteuerventil 72 bleibt der Steuerkolben 80 weiter in der Ruhestellung, weil die Vorspannkraft der Druckfeder 85 und die gleichsinnig wirkende zweite Steuerkraft, hervorgerufen durch den Staudruck in der benachrangbaren Rücklaufleitung 70, in Summe größer sind, als die vom Druck in der Wendezylinderzuleitung 81 auf die erste Wirkfläche 84 in Richtung der Umschaltstellung ausgeübte erste Steuerkraft. Um die zweite Steuerkraft auch bei freigegebenem Fließweg im Absperrventil 73 in sicherer Höhe zu halten, ist in der benachrangbaren Rücklaufleitung 70 ein Drosselelement 89 angeordnet, wodurch ein entsprechender Staudruck während des Hydraulikmittelabflusses hervorgerufen wird.

Die Einfahrbewegung des Wendezylinders 52 endet, wie bereits bei der Steuervorrichtung 1 für einen Drehpflug ohne Pflugrahmeneinschwenkung beschrieben, bei Erreichen des Totpunktes durch den Anlenkpunkt mit der Kolbenstange 54. Durch den Stillstand des Kolbens 53 steigt der Druck in der Zuleitung 66 bzw. der Wendezylinderzuleitung 81 stark an wodurch die erste Steuerkraft zunimmt, wogegen der Druck in der benachrangbaren Rücklaufleitung 70 komplett abfällt, da der Staudruck zusammenbricht und die zweite Steuerkraft vernachlässigbar klein wird. Sobald nun die erste Steuerkraft größer als die Vorspannkraft der Druckfeder 83 wird, die auf einen Umschaltdruck von etwa 150 bar ausgelegt ist, wird der Steuerkolben 80 entgegen der Druckfederkraft aus der Ruhestellung in die Umschaltstellung gedrückt und die Fließwege im Umsteuerventil 72 entsprechend verändert, wodurch die dritte Phase - die zweite Teildrehung des Pflugrahmens durch Einfahren des Wendezylinders 52 eingeleitet wird. Dabei sorgt die Massenträgheit des Pflugrahmens dafür, dass die Drehbewegung über den Totpunkt hinaus fortgesetzt wird und nicht nach der ersten Phase der Drehbewegung wieder umgekehrt wird.

In der Umschaltstellung des Umsteuerventils 72 sind nun die Zuleitung 66 mit der Leitung 58 zum Wendezylinderkolbenraum 55 und der Leitung 64 zu Schwenkzylinderringraum 63, die Leitung 57 vom Wendezylinderringraum 56 mit der bevorrangbaren Rücklaufleitung 71 sowie die Leitung 65 vom Schwenkzylinderkolbenraum 62 mit der benachrangbaren Rücklaufleitung 70 fluidverbunden. Auf den Steuerkolben 80 wirkt in der Umschaltstellung zusätzlich die dritte Steuerkraft in Richtung der Umschaltstellung, indem eine erste Stirnfläche oder der nicht durch ein Betätigungselement abgedeckte Teil der Stirnfläche über die Steuerleitung 88 mit dem Druck in der Leitung 58 zum Wendezylinderkolbenraum 55 beaufschlagt ist, wodurch der Steuerkolben 80 zuverlässig in der Umschaltstellung gehalten ist.

Damit sich nicht beide parallel geschalteten Zylinder gleichzeitig in Bewegung setzen, ist wie in der ersten Phase wieder die Bevorrangung eines Zylinders durch das Absperrventil 73 erforderlich. Dieses befindet sich zu Beginn der dritten Phase noch in der Ruhestellung, in der für beide Rücklaufleitungen 70 und 71 einen freier Fließweg zur gemeinsamen Rücklaufleitung 68 besteht. Durch den beginnenden Hydraulikmittelabfluss aus dem Wendezylinderringraum 56 über die bevorrangbare Rücklaufleitung 71 bildet sich durch das Drosselelement 78 ein Staudruck der über die Steuerleitung 77 auf die Steuerfläche 76 geleitet wird, wodurch der Steuerkolben 74 entgegen der von der Druckfeder 75 ausgeübten Vorspannkraft aus der Ruhestellung in die Umschaltstellung (wie in Fig. 2 dargestellt) gedrückt wird. Dadurch wird die benachrangbare Rücklaufleitung 70, durch die das Hydraulikfluid aus dem Schwenkzylinderkolbenraum 62 zum Rücklaufanschluss 69 fließen würde, abgesperrt und der Schwenkzylinder 59 verbleibt in der ausgefahrenen Stellung, während der Wendezylinder 52 wieder ausfährt und dadurch die zweite Teildrehung des Pflugrahmes antreibt.

Das Ende der Ausfahrbewegung der Kolbenstange 54 des Wendezylinders 52 wird durch einen festen Anschlag bestimmt, durch den eine weitere Bewegung des Anlenkpunkts oder des Pflugrahmens blockiert wird und die zweite, gedrehte Arbeitsposition des Pflugrahmens festgelegt ist. Ist diese Position erreicht, fließt durch den Stillstand des Kolbens 53 kein Hydraulikfluid mehr durch die bevorrangbare Rücklaufleitung 71, der durch das Drosselelement 78 hervorgerufene Staudruck bricht zusammen und die Druckkraft auf die Steuerfläche 76 wird vernachlässigbar klein, wodurch der Steuerkolben 74 von der Druckfeder 75 in die Ruhestellung gedrückt wird und der Fließweg von der benachrangbaren Rücklaufleitung 70 zur gemeinsamen Rücklaufleitung 68 freigegeben wird. In der durch diesen Schaltvorgang eingeleiteten vierten Phase ist der Hydraulikmittelabfluss aus dem Schwenkzylinderkolbenraum 62 möglich, die Kolbenstange 61 des Schwenkzylinders 59 fährt ein und schwenkt dabei den Pflugrahmen in die Arbeitsstellung.

Mit dem Erreichen der eingefahrenen Endstellung des Schwenkzylinders 59 ist der Wendevorgang vollständig abgeschlossen, der Bediener der Zugmaschine unterbricht die Zufuhr von Hydraulikfluid am Hochdruckanschluss 69 sowie den Rückfluss von Hydraulikfluid vom Rücklaufanschluss 67. Durch geringe Leckströme im Umsteuerventil 72 gleichen sich die unterschiedlichen Drücke zwischen den beiden Stirnseiten des Steuerkolbens 80 nach kurzer Zeit aus und die Druckfeder 83 drückt den Steuerkolben 80 wieder zurück in die Ruhestellung, wodurch wieder die Ausgangsstellung der Steuervorrichtung 51 hergestellt ist. Um diesen Druckausgleich zu beschleunigen, kann im Umsteuerventil 72 auch ein gedrosselter Druckausgleichskanal vorgesehen sein, der in der Umschaltstellung die Hochdruckseite und die Niederdruckseite verbindet.

Die Steuervorrichtung 51 umfasst weiters in der Leitung 77 zum Wendezylinderringraum 56 ein in Richtung des Umsteuerventils 72 drosselndes Drosselrückschlagventil 90 mit einer Drosselblende, die den Abfluss von Hydraulikfluid aus dem Wendezylinderringraum 56 drosselt und dadurch die Ausfahrgeschwindigkeit der Kolbenstange 54 verlangsamt. Dadurch wird auch die Geschwindigkeit, mit der der Pflugrahmen gegen den die Arbeitsposition bestimmenden Anschlag fährt reduziert und der mechanische Aufbau des Pfluges geschont. Durch die Wahl des Drosselblendendurchmessers kann diese Geschwindigkeit leicht an die Erfordernisse unterschiedlicher Pfluggrößen angepasst werden.

In der Leitung 58 vom Wendezylinderkolbenraum 55 und der Leitung 65 vom Schwenkzylinderkolbenraum sind ebenfalls in Richtung des Umsteuerventils 72 drosselnde Drosselrückschlagventile 90 mit einer Drosselblende eingebaut, durch die die Einfahrgeschwindigkeit dieser Zylinder angepasst werden kann.

In der Leitung 58 vom Wendezylinderkolbenraum 55 ist ein in Richtung des Umsteuerventils 72 sperrendes Rückschlagventil 91 angeordnet, das durch den Druck in der Leitung 57 zum Wendezylinderringraum 56 entsperrt werden kann. Zum Entsperren enthält das Rückschlagventil 91 einen auf ein im Rückschlagventil 91 enthaltenes Sperrelement wirkenden Aufsteuerkolben, der über eine Steuerleitung 92 mit der Leitung 57 zum Wendezylinderringraum 56 fluidverbunden ist. Eine am Aufsteuerkolben wirksame Druckfläche ist dabei größer als eine am Sperrelement in Sperrrichtung wirksame Druckfläche, wodurch das Rückschlagventil 91 bei anliegenden Hochdruck in der Leitung 57 zum Wendezylinderringraum 56 zuverlässig entsperrt wird und das im Wendezylinderkolbenraum 55 verdrängte Hydraulikfluid abfließen kann.

Weiters sind in der Leitung 65 zum Schwenkzylinderkolbenraum 62 und in der Leitung 64 zum Schwenkzylinderringraum 63 ebenfalls in Richtung des Umsteuerventils 72 sperrende Rückschlagventile 93 angeordnet, die jeweils durch eine Steuerleitung 94 zur anderen Schwenkzylinderleitung entsperrbar sind.

Der Vorteil durch die Anordnung der Rückschlagventile 91 und 93 besteht darin, dass ein Abfluss von Hydraulikfluid aus dem Wendezylinderkolbenraum 55 und dem Schwenkzylinderkolbenraum 62 bzw. dem Schwenkzylinderringraum 63 nur bei Hochdruck in der Leitungen 57 und 64 bzw. 65 möglich ist, also während der Durchführung eines Wendevorganges und nach Abschluss des Wendevorganges der Wendezylinderkolbenraum 55 und der Schwenkzylinder 59 abgesperrt sind, wodurch der Pflugrahmen während des Betriebes auch ohne Hydraulikmittelzufuhr am Hochdruckanschluss 10 in der ausgeschwenkten Arbeitsposition gehalten wird.

Zum Schutz vor festen Fremdkörpern, die über die Anschlüsse in die Folgesteuervorrichtung 51 eindringen können, sind in der Zuleitung 66 und der Rücklaufleitung 68 vorzugsweise möglichst nahe am Hochdruckanschluss 67 bzw. Rücklaufanschluss 69 Siebelemente 95 angeordnet.

In Fig. 3 ist noch eine andere Ausführung des Umsteuerventils 72 dargestellt, bei der in der Ruhestellung des Steuerkolbens 80 durch diesen eine Absperrung der Steuerleitung 88 erfolgt und in der Umschaltstellung ein zusätzlicher Fließweg von der Hochdruck führenden Wendezylinderzuleitung 81 (oder gleichwertig der Zuleitung 66 oder der Schwenkzylinderzuleitung 82) zur Steuerleitung 88 bildet, wodurch die Selbsthaltefunktion des Umsteuerventils 72 ermöglicht ist. Weiters ist dieser Fließweg über eine Drossel mit einem Fließweg zu einer Rücklaufleitung 70, 71 verbunden, wodurch sich der Druck bei Abschaltung des Hochdrucks am Hochdruckanschluss zusätzlich zu den geringen bestehenden Leckströmen am Steuerkolben 80 abbauen kann und die Selbsthaltefunktion der Umschaltstellung beendet wird.

Der Vollständigkeit halber sei erwähnt, dass alle genannten Leitungen und Steuerleitungen in allen denkbaren Formen wie z.B. Rohre, Schläuche, spanend hergestellte oder gegossene Kanäle in einem Ventilblock und sonstigen Fluidverbindungen sowie Kombinationen daraus realisiert sein können.

Insbesondere kann die gesamte Steuervorrichtung 1 in einen Ventilblock zusammengefasst sein, der am Gehäuse des Wendezylinders 2 angeflanscht ist oder im Bodenstück des Wendezylinders 2 integriert ist. Ebenso kann die Folgesteuervorrichtung 51 in einen Ventilblock zusammengefasst sein, der am Gehäuse des Wendezylinders 52 angeflanscht ist oder im Bodenstück des Wendezylinders 52 integriert ist. Die die Zylinderräume des Schwenkzylinders 59 absperrenden Rückschlagventile 93, oder das diesen entsprechende Doppelrückschlagventil sind aus Sicherheitsgründen in unmittelbarer Nähe des oder direkt am Schwenkzylinder 59 angeordnet.

Falls der Wendezylinder 2 bzw. 52 und/oder der Schwenkzylinder 59 durch geänderte Anordnung zwischen feststehendem Pflugturm und dem zu drehenden Pflugrahmen in der Arbeitsposition des Pflugrahmens in eingefahrenem Zustand gehalten werden muss, sowie den Totpunkt in der ausgefahrenen Stellung erreicht, sind die Anschlüsse zwischen Steuervorrichtung 1 bzw. Folgesteuervorrichtung 51 und Wendezylinder 2 bzw. 52 und Schwenkzylinder 59 zu vertauschen, wodurch sich jeweils die Bewegungsabfolge umkehrt.

Die Ausführungsbeispiele zeigen jeweils eine mögliche Ausführungsvariante der Steuervorrichtung sowie der Folgesteuervorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mitumfasst.

Der Ordnung halber sei abschließend darauf hingewiesen, dass zum besseren Verständnis des Aufbaus und der Funktion der Steuervorrichtung bzw. der Folgesteuerungsvorrichtung diese bzw. deren Bestandteile mit vereinfachten Symbolen dargestellt wurden.

Die den eigenständigen erfinderischen Lösungen zugrunde liegende Aufgabe kann der Beschreibung entnommen werden.

Vor allem können die einzelnen in den Fig. 1, 2 und 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Steuervorrichtung
- 2: Wendezylinder
- 3: Kolben
- 4: Kolbenstange
- 5: Wendezylinderkolbenraum

- 6: Wendezylinderringraum
- 7: Leitung
- 8: Leitung
- 9: Zuleitung
- 10: Hochdruckanschluss

- 11: Rücklaufleitung
- 12: Rücklaufanschluss
- 13: Umsteuerventil
- 14: Steuerkolben
- 15: Druckfeder

- 16: Wirkfläche
- 17: Steuerleitung
- 18: Wirkfläche
- 19: Steuerleitung
- 20: Steuerleitung

- 21: Drosselelement
- 22: Druckausgleichskanal
- 23: Drosselrückschlagventil
- 24: Rückschlagventil
- 25: Steuerleitung
- 26: Siebelement

- 51: Folgesteuervorrichtung
- 52: Wendezylinder
- 53: Kolben
- 54: Kolbenstange
- 55: Wendezylinderkolbenraum

- 56: Wendezylinderringraum
- 57: Leitung
- 58: Leitung
- 59: Schwenkzylinder
- 60: Kolben

- 61: Kolbenstange
- 62: Schwenkzylinderkolbenraum
- 63: Schwenkzylinderringraum
- 64: Leitung
- 65: Leitung

- 66: Zuleitung
- 67: Hochdruckanschluss
- 68: Rücklaufleitung
- 69: Rücklaufanschluss
- 70: Rücklaufleitung

- 71: Rücklaufleitung
- 72: Umsteuerventil
- 73: Absperrventil
- 74: Steuerkolben
- 75: Druckfeder

- 76: Steuerfläche
- 77: Steuerleitung
- 78: Drosselelement
- 79: Leitung
- 80: Steuerkolben

- 81: Wendezylinderzuleitung
- 82: Schwenkzylinderzuleitung
- 83: Druckfeder
- 84: Wirkfläche
- 85: Steuerleitung

- 86: Wirkfläche
- 87: Steuerleitung
- 88: Steuerleitung
- 89: Drosselelement
- 90: Drosselrückschlagventil

- 91: Rückschlagventil
- 92: Steuerleitung
- 93: Rückschlagventil
- 94: Steuerleitung
- 95: Siebelement

## Patentansprüche

1. Verfahren zur Steuerung eines doppeltwirkenden Wendezylinders (2) bei der Durchführung des Wendevorgangs eines Drehpfluges, bei dem der Drehpflug in einer ersten Phase durch Einfahren der Kolbenstange (4) des Wendezylinders (2) gedreht und bei Erreichen eines Totpunkts der Bewegung in einer zweiten Phase nach Umschaltung der Bewegungsrichtung der Kolbenstange (4) weitergedreht wird, wobei die Umschaltung der Bewegungsrichtung durch zumindest ein in einer Zuleitung (9) von einem Hochdruckanschluss (10) und einer Rücklaufleitung (11) zu einem Rücklaufanschluss (12) angeordnetes Umsteuer-Wegeventil (13) mit einem in einem Ventilgehäuse zwischen einer Ruhestellung und einer Umschaltstellung verstellbaren Steuerkolben (14) erfolgt und die Verstellung des Steuerkolbens (14) von der Ruhestellung in die Umschaltstellung durch Ansteigen des Drucks in der Zuleitung (9) des Wendezylinders (2) und Absinken des Drucks in der Rücklaufleitung (11) des Wendezylinders (2) beim Erreichen des Totpunkts der Bewegung der Kolbenstange (4) ausgelöst wird, wobei am Steuerkolben (14) oder an einem auf diesen wirkenden Betätigungselement eine erste Wirkfläche (16) ausgebildet ist und dazu gegensinnig am Steuerkolben (14) oder an einem auf diesen wirkenden Betätigungselement eine zweite Wirkfläche (18) ausgebildet ist, und die zweite Wirkfläche (18) in Richtung der Ruhestellung mit dem Druck in der Rücklaufleitung (11) zwischen Umsteuerventil (13) und Rücklaufanschluss (12) beaufschlagt wird, **dadurch gekennzeichnet, dass** die erste Wirkfläche (16) in allen Betriebszuständen in Richtung der Umschaltstellung mit dem Druck in der Zuleitung (9) zwischen Hochdruckanschluss (10) und Umsteuerventil (13) beaufschlagt wird.

2. Steuervorrichtung (1) für einen hydraulisch betätigbaren Drehpflug, umfassend einen doppeltwirkenden Wendezylinder (2) mit einer Leitung (7) zum Wendezylinderringraum (6) und einer Leitung (8) zum Wendezylinderkolbenraum (5), eine Zuleitung (9) zur Zuführung von Hydraulikfluid von einem Hochdruckanschluss (10) und eine Rücklaufleitung (11) zur Rückleitung des im Wendezylinder (2) verdrängten Hydraulikfluids zu einem Rücklaufanschluss (12), zumindest ein Umsteuerventil (13) mit einem in einem Ventilgehäuse zwischen einer Ruhestellung in einer Umschaltstellung verstellbaren Steuerkolben (14), das in der Ruhestellung die Leitung (7) zum Wendezylinderringraum (6) mit der Zuleitung (9) verbindet sowie in der Umschaltstellung die Leitung (8) zum Wendezylinderkolbenraum (5) mit der Zuleitung (9) verbindet und in der Umschaltstellung selbsthaltend ist, wobei am Steuerkolben (14) oder an einem auf diesen wirkenden Betätigungselement eine erste Wirkfläche (16) ausgebildet ist und dazu gegensinnig am Steuerkolben (14) oder an einem auf diesen wirkenden Betätigungselement eine zweite Wirkfläche (18) ausgebildet ist, und die zweite Wirkfläche (18) über eine Steuerleitung (19) mit der Rücklaufleitung (11) fluidverbunden ist, vorzugsweise zur Durchführung des Verfahrens nach Anspruch 1, **dadurch gekennzeichnet, dass** in allen Stellungen des Umsteuerventils (13) die erste Wirkfläche (16) über eine Steuerleitung (17) fix mit der Zuleitung (9) fluidverbunden ist.

3. Steuervorrichtung (1) nach Anspruch 2, **dadurch gekennzeichnet, dass** die erste Wirkfläche (16) kleiner als die zweite Wirkfläche (18) ist.

4. Steuervorrichtung (1) nach Anspruch 3, **dadurch gekennzeichnet, dass** das die erste Wirkfläche (16) bildende Betätigungselement stiftförmig ausgebildet und im Ventilgehäuse axial verschieblich sowie abgedichtet geführt ist wobei ein Ende im Ventilgehäuse mit der Zuleitung (9) fluidverbunden ist und die Länge des Betätigungselements so gewählt ist, dass sich das zweite Ende durch axiales Verschieben am Steuerkolben (14) abstützt, wodurch auf den Steuerkolben (14) eine Kraft in Richtung der Umschaltstellung wirkt.

5. Steuervorrichtung (1) nach einem der Ansprüche 2 bis 4, **dadurch gekennzeichnet, dass** zwischen Steuerkolben (14) und Ventilgehäuse eine gleichsinnig zur zweiten Wirkfläche (18) in Richtung der Ruhestellung wirkende, vorgespannte Druckfeder (15) angeordnet ist.

6. Steuervorrichtung (1) nach einem der Ansprüche 3 bis 5, **dadurch gekennzeichnet, dass** das Flächenverhältnis zwischen zweiter Wirkfläche (18) und erster Wirkfläche (16) einen Wert ausgewählt aus einem Bereich mit einer unteren Grenze von 10, insbesondere 20, vorzugsweise 25 und einer oberen Grenze von 50, insbesondere 40, vorzugsweise 30 aufweist.

7. Steuervorrichtung (1) nach Anspruch 5 und 6, **dadurch gekennzeichnet, dass** bei einem am Hochdruckanschluss (10) bereitgestellten Maximaldruck in einem Bereich von 200 bar bis 250 bar die Vorspannung der Druckfeder (15) so gewählt ist, dass die Umschaltung des Steuerkolbens (14) bei einem Anstieg des Differenzdrucks zwischen dem auf die erste Wirkfläche (16) wirkenden Druck in der Zuleitung (9) und dem auf die zweite Wirkfläche (18) wirkenden Druck in der Rücklaufleitung (11) über einen Wert ausgewählt aus einem Bereich mit einer unteren Grenze von 100 bar, vorzugsweise 120 bar, insbesondere 140 bar und einer oberen Grenze von 200 bar, vorzugsweise 180, bar, insbesondere 160 bar erfolgt.

8. Steuervorrichtung (1) nach einem der Ansprüche 2 bis 7, **dadurch gekennzeichnet, dass** in der Rücklaufleitung (11) zwischen Umsteuerventil (13) und Rücklaufanschluss (12) ein Drosselelement (21) angeordnet ist.

9. Steuervorrichtung (1) nach einem der Ansprüche 2 bis 8, **dadurch gekennzeichnet, dass** in der Umschaltstellung die gesamte gleichsinnig mit der ersten Wirkfläche (16) wirkende Stirnfläche des Steuerkolbens (14) mit der Zuleitung (9) fluidverbunden ist.

10. Steuervorrichtung (1) nach einem der Ansprüche 2 bis 9, **dadurch gekennzeichnet, dass** in der Leitung (8) zum Wendezylinderkolbenraum (5) ein in Richtung zum Umsteuerventil (13) sperrendes, Rückschlagventil (24) mit einem mit der Leitung (7) zum Wendezylinderringraum (6) fluidverbundenen Aufsteuerkolben angeordnet ist.

11. Steuervorrichtung (1) nach einem der Ansprüche 2 bis 10, **dadurch gekennzeichnet, dass** in der Leitung (7) zum Wendezylinderringraum (6) ein in Richtung des Umsteuerventils (13) drosselndes Drosselrückschlagventil (23) angeordnet ist.

12. Drehpflug mit Steuervorrichtung, **dadurch gekennzeichnet, dass** die Steuervorrichtung nach einem der Ansprüche 2 bis 11 ausgebildet ist.

13. Verfahren zur Steuerung von Hydraulikzylindern bei der Durchführung des Wendevorgangs eines Drehpfluges mit Pflugrahmeneinschwenkung, wobei der Drehpflug in einer ersten Phase durch Ausfahren eines Schwenkzylinders (59) eingeschwenkt, in einer zweiten Phase durch Einfahren eines Wendezylinders (52) gedreht, nach Erreichen eines Totpunkts der Bewegung des Wendezylinders (52) darauf folgend in einer dritten Phase durch Ausfahren des Wendezylinders (52) weitergedreht und in einer vierten Phase durch Einfahren des Schwenkzylinders (59) wieder ausgeschwenkt wird, wozu eine aufeinander folgende Betätigung der zwischen einer Zuleitung (66) von einem Hochdruckanschluss (67) und einer Rücklaufleitung (68) zu einem Rücklaufanschluss (69) zueinander parallel geschalteten Schwenk- und Wendezylinder (59, 52) dadurch bewirkt wird, dass der Schwenkzylinder (59) in der ersten Phase bevorrangt wird, indem der Rückfluss von Hydraulikfluid vom Wendezylinderkolbenraum (55) zum Rücklaufanschluss (69) während des Abflusses von Hydraulikfluid aus dem Schwenkzylinderringraum (63) mittels eines Absperrventils (73) gesperrt wird und nach der selbständigen Umkehrung der Bewegungsrichtungen von Wendezylinder (52) und Schwenkzylinder (59) im Totpunkt durch ein Umsteuerventil (72) mit einem in einem Ventilgehäuse zwischen einer Ruhestellung und einer Umschaltstellung verstellbaren Steuerkolben (80) der Wendezylinder (52) in der dritten Phase bevorzugt wird, indem der Rückfluss von Hydraulikfluid vom Schwenkzylinderkolbenraum (62) zum Rücklaufanschluss (69) während des Abflusses von Hydraulikfluid aus dem Wendezylinderringraum (56) mittels des Absperrventils (73) gesperrt wird, wobei die Verstellung des Umsteuerventils (72) in die Umschaltstellung durch Ansteigen der Druckdifferenz zwischen einem, bei Erreichen des Totpunkts zwischen zweiter und dritter Phase ansteigenden Druck in der Zuleitung (66) und einem im Totpunkt abfallenden Druck in der Rücklaufleitung (68) des Wendezylinders (52) über einen Schwellwert ausgelöst wird, **dadurch gekennzeichnet, dass** das in Wendezylinder (52) und Schwenkzylinder (59) verdrängte Hydraulikfluid vom Umsteuerventil (72) in einer benachrangbaren Rücklaufleitung (70) und einer bevorrangbaren Rücklaufleitung (71) zum Absperrventil (73) geführt wird und die Druckdifferenz direkt auf den Steuerkolben (72) wirkt, indem eine erste Wirkfläche (84) des Steuerkolbens (80) oder ein auf diese wirkendes Betätigungselement in allen Betriebszuständen in Richtung der Umschaltstellung mit dem Druck in der Zuleitung (66) beaufschlagt wird und gleichzeitig eine zweite Wirkfläche (86) oder ein auf diese wirkendes Betätigungselement in Richtung der Ruhestellung mit dem Druck in der benachrangbaren Rücklaufleitung (71) beaufschlagt wird.

14. Folgesteuervorrichtung (51) für einen hydraulisch betätigbaren Drehpflug mit Pflugrahmeneinschwenkung, umfassend einen doppeltwirkenden Wendezylinder (52) mit einer Leitung (57) zum Wendezylinderringraum (56) sowie einer Leitung (58) zum Wendezylinderkolbenraum (55) und einen doppeltwirkenden Schwenkzylinder (59) mit einer Leitung (65)'zum Schwenkzylinderkolbenraum (62) sowie einer Leitung (64) zum Schwenkzylinderringraum (63), zumindest eine Zuleitung (66) zur Zuführung von Hydraulikfluid von einem Hochdruckanschluss (67), zumindest eine Rücklaufleitung (68) zur Ableitung des im Wendezylinder (52) oder im Schwenkzylinder (59) verdrängten Hydraulikfluids zu einem Rücklaufanschluss (69), ein Umsteuerventil (72) mit einem in einem Ventilgehäuse zwischen einer Ruhestellung und einer Umschaltstellung umschaltbaren Steuerkolben (80), das in der Ruhestellung die Leitungen (57, 65) zum Wendezylinderringraum (56) und zum Schwenkzylinderkolbenraum (62) mit der Zuleitung (66) verbindet sowie in der Umschaltstellung die Leitungen (58, 64) zum Wendezylinderkolbenraum (55) und zum Schwenkzylinderringraum (63) mit der Zuleitung (66) verbindet und in der Umschaltstellung selbsthaltend ist, ein Absperrventil (73) zur Bevorrangung des Wendezylinders (52) oder des Schwenkzylinders (59) durch Absperren des Rückflusses von Hydraulikfluid vom jeweils anderen Zylinder, vorzugsweise zur Durchführung des Verfahrens nach Anspruch 13, **dadurch gekennzeichnet, dass** vom Umsteuerventil (72) eine benachrangbare Rücklaufleitung (70) und eine bevorrangbare Rücklaufleitung (71) zum zwischen Umsteuerventil (72) und Rücklaufanschluss (69) angeordneten Absperrventil (73) führen, in allen Stellungen des Umsteuerventils (72) eine erste Wirkfläche (84) am Steuerkolben (80) oder an einem auf den Steuerkolben (80) wirkenden Betätigungselement über eine Steuerleitung (85) fix mit der Zuleitung (66) fluidverbunden ist und eine gegensinnig zur ersten Wirkfläche (84) orientierte, zweite Wirkfläche (86) am Steuerkolben (80) oder an einem auf den Steuerkolben (80) wirkenden Betätigungselement mit der benachrangbaren Rücklaufleitung (70) fluidverbunden ist.

15. Folgesteuervorrichtung (51) nach Anspruch 14, **dadurch gekennzeichnet, dass** die erste Wirkfläche (84) kleiner als zweite Wirkfläche (86) ist.

16. Folgesteuervorrichtung (51) nach Anspruch 15, **dadurch gekennzeichnet, dass** das die erste Wirkfläche (84) bildende Betätigungselement stiftförmig ausgebildet und im Steuerkolben (80) axial verschieblich sowie abgedichtet geführt ist wobei ein Ende im Inneren des Steuerkolbens (80) in der Ruhestellung mit der Zuleitung (66) fluidverbunden ist und die Länge des Betätigungselements so gewählt ist, dass sich das zweite Ende durch axiales Verschieben am Ventilgehäuse abstützt, wodurch auf den Steuerkolben (80) eine Kraft in Richtung der Umschaltstellung wirkt.

17. Folgesteuervorrichtung (51) nach einem der Ansprüche 14 bis 16, **dadurch gekennzeichnet, dass** zwischen Steuerkolben (80) und Ventilgehäuse eine gleichsinnig zur zweiten Wirkfläche (86) in Richtung der Ruhestellung wirkende, vorgespannte Druckfeder (83) angeordnet ist.

18. Folgesteuervorrichtung (51) nach einem der Ansprüche 15 bis 17, **dadurch gekennzeichnet, dass** das Flächenverhältnis zwischen zweiter Wirkfläche (86) und erster Wirkfläche (84) einen Wert ausgewählt aus einem Bereich mit einer unteren Grenze von 10, insbesondere 20, vorzugsweise 25 und einer oberen Grenze von 50, insbesondere 40, vorzugsweise 30 aufweist.

19. Folgesteuervorrichtung (51) nach Anspruch 17 und 18, **dadurch gekennzeichnet, dass** bei einem am Hochdruckanschluss (67) bereitgestellten Maximaldruck in einem Bereich von 200 bar bis 250 bar die Vorspannung der Druckfeder (83) so gewählt ist, dass die Umschaltung des Steuerkolbens (80) bei einem Anstieg des Differenzdrucks zwischen Zuleitung (66) und benachrangbarer Rücklaufleitung (70) über einen Wert ausgewählt aus einem Bereich mit einer unteren Grenze von 100 bar, vorzugsweise 120 bar, insbesondere 140 bar und einer oberen Grenze von 200 bar, vorzugsweise 180, bar, insbesondere 160 bar erfolgt.

20. Folgesteuervorrichtung (51) nach einem der Ansprüche 14 bis 19, **dadurch gekennzeichnet, dass** in der benachrangbaren Rücklaufleitung (70) zwischen Umsteuerventil (72) und Absperrventil (73) ein Drosselelement (89) angeordnet ist.

21. Folgesteuervorrichtung (51) nach einem der Ansprüche 14 bis 20, **dadurch gekennzeichnet, dass** in der Umschaltstellung die gesamte gleichsinnig mit der ersten Wirkfläche (84) wirkende Stirnfläche des Steuerkolbens (80) mit der Zuleitung (66) oder der Leitung (58) zum Wendezylinderkolbenraum (55) oder der Leitung (64) zum Schwenkzylinderringraum (63) fluidverbunden ist.

22. Folgesteuervorrichtung (51) nach einem der Ansprüche 14 bis 21, **dadurch gekennzeichnet, dass** in der Leitung (58) zum Wendezylinderkolbenraum (55) ein in Richtung zum Umsteuerventil (72) sperrendes, Rückschlagventil (91) mit einem mit der Leitung (57) zum Wendezylinderringraum (56) fluidverbundenen Aufsteuerkolben angeordnet ist.

23. Folgesteuervorrichtung (51) nach einem der Ansprüche 14 bis 22, **dadurch gekennzeichnet, dass** in der Leitung (58) zum Wendezylinderkolbenraum (55) ein in Richtung des Umsteuerventils (72) drosselndes Drosselrückschlagventil (90) angeordnet ist.

24. Folgesteuervorrichtung (51) nach einem der Ansprüche 14 bis 23, **dadurch gekennzeichnet, dass** in der Leitung (57) zum Wendezylinderringraum (56) ein in Richtung des Umsteuerventils (72) drosselndes Drosselrückschlagventil (90) angeordnet ist.

25. Folgesteuervorrichtung (51) nach einem der Ansprüche 14 bis 24, **dadurch gekennzeichnet, dass** in den beiden Leitungen (64, 65) zum Schwenkzylinder (59) je ein entsperrbares, in Richtung des Umschaltventils sperrendes Rückschlagventil (93) mit einem über eine Steuerleitung 94 mit der jeweils anderen Leitung fluidverbundenen Aufsteuerkolben oder ein wechselseitig entsperrbares Doppelrückschlagventil angeordnet ist.

26. Folgesteuervorrichtung (51) nach einem der Ansprüche 14 bis 25, **dadurch gekennzeichnet, dass** in der Leitung (65) zum Schwenkzylinderkolbenraum (62) ein in Richtung des Umsteuerventils (72) drosselndes Drosselrückschlagventil (90) angeordnet ist.

27. Folgesteuervorrichtung (51) nach einem der Ansprüche 14 bis 26, **dadurch gekennzeichnet, dass** die Zuleitung (66) zwischen Hochdruckanschluss (67) und Umsteuerventil (72) in eine Wendezylinderzuleitung (81) und eine Schwenkzylinderzuleitung (82) verzweigt ist.

28. Folgesteuervorrichtung (51) nach einem der Ansprüche 14 bis 27, **dadurch gekennzeichnet, dass** das Umsteuerventil (72) als 8/2-Wegeventil ausgebildet ist.

29. Folgesteuervorrichtung (51) nach einem der Ansprüche 14 bis 28, **dadurch gekennzeichnet, dass** im Absperrventil (73) ein zwischen einer durch eine vorgespannte Druckfeder (75) bestimmten Ruhestellung und einer Umschaltstellung verstellbarer Steuerkolben (74) angeordnet ist, wobei in der Ruhestellung die benachrangbare Rücklaufleitung (70) und die bevorrangbare Rücklaufleitung (71) mit der gemeinsamen Rücklaufleitung (68) fluidverbunden sind und in der Umschaltstellung die benachrangbare Rücklaufleitung (70) gesperrt sowie die bevorrangbare Rücklaufleitung (71) mit der gemeinsamen Rücklaufleitung (68) fluidverbunden ist.

30. Folgesteuervorrichtung (51) nach einem der Ansprüche 14 bis 29, **dadurch gekennzeichnet, dass** im Absperrventil (73) der Fließweg für die bevorrangbare Rücklaufleitung (71) ein Drosselelement (78) aufweist.

31. Folgesteuervorrichtung (51) nach Anspruch 29 oder 30, **dadurch gekennzeichnet, dass** eine in Richtung der Umschaltstellung des Absperrventils (73) wirkende Stirnfläche (76) des Steuerkolbens (74) im Absperrventil (73) über eine Steuerleitung (77) mit der bevorrangbaren Rücklaufleitung (71) fluidverbunden ist.

32. Folgesteuervorrichtung (51) nach einem der Ansprüche 29 bis 31, **dadurch gekennzeichnet, dass** die Vorspannung der Druckfeder (75) so gewählt ist, dass während des Abflusses von Hydraulikfluid in der bevorrangbaren Rücklaufleitung (71) der Steuerkolben (74) durch den Druck in der bevorrangbaren Rücklaufleitung (71) entgegen der Kraft der Druckfeder (75) in die Umschaltstellung verstellt wird.

33. Drehpflug mit Folgesteuervorrichtung, **dadurch gekennzeichnet, dass** die Folgesteuervorrichtung nach einem der Ansprüche 14 bis 32 ausgebildet ist.

## Claims

1. A method for the control of a double-acting turning ram (2) during execution of the process of turning a turnover plough, in which, in a first phase, the turnover plough is rotated by retraction of the piston rod (4) of the turning ram (2), and, upon reaching a dead point of the movement, is rotated further in a second phase after switching over the direction of movement of the piston rod (4), wherein
the switchover of the movement of direction is undertaken by at least one directional changeover valve (13) arranged in a supply line (9) from a high pressure port connection (10) and a return line (11) to a return port connection (12), with a control piston (14) that can be displaced between an idle position and a switchover position, and the displacement of the control piston (14) from the idle position into the switchover position is triggered upon reaching the dead point of the movement of the piston rod (4) by an increase in the pressure in the supply line (9) to the turning ram (2) and a reduction of the pressure in the return line (11) from the turning ram (2), wherein
a first active surface (16) is designed on the control piston (14), or on an actuation element acting on the latter, and, in a contrary direction to the first active surface, a second active surface (18) is designed on the control piston (14), or on an actuation element acting on the latter, and the pressure in the return line (11) between the changeover valve (13) and the return port connection (12) is applied to the second active surface (18) in the direction of the idle position,
**characterised in that**,
in all operating states the pressure in the supply line (9) between the high pressure port connection (10) and the changeover valve (13) is applied to the first active surface (16) in the direction of the switchover position.

2. A control device (1) for a turnover plough that can be hydraulically actuated, comprising a double-acting turning ram (2) with a line (7) to the turning ram annulus (6), and a line (8) to the turning ram piston chamber (5), a line (9) for purposes of supplying hydraulic fluid from a high pressure port connection (10) and a return line (11) for purposes of returning the hydraulic fluid displaced in the turning ram (2) to a return port connection (12), at least one changeover valve (13) with, in a valve housing, a control piston (14) that can be displaced between an idle position and a switchover position, which in the idle position connects the line (7) to the turning ram annulus (6) with the supply line (9), and in the switchover position connects the line (8) to the turning ram piston chamber (5) with the supply line (9), and automatically retains its position in the switchover position, wherein
a first active surface (16) is designed on the control piston (14), or on an actuation element acting on the latter, and, in a contrary direction to the first active surface, a second active surface (18) is designed on the control piston (14), or on an actuation element acting on the latter, and the second active surface (18) is connected in fluid terms, via a control line (19), with the return line (11), preferably for purposes of executing the method in accordance with claim 1,
**characterised in that**,
in all positions of the changeover valve (13) the first active surface (16) is connected in fluid terms, via a control line (17), with the supply line (9) in a fixed manner.

3. The control device (1) in accordance with claim 2, **characterised in that**, the first active surface (16) is smaller than the second active surface (18).

4. The control device (1) in accordance with claim 3, **characterised in that**,
the actuation element forming the first active surface (16) is designed in the form of a pin, and is guided in the valve housing such that it can move axially whilst sealed, wherein
in the valve housing one end is connected in fluid terms with the supply line (9), and the length of the actuation element is selected such that the second end is supported on the control piston (14) by means of axial movement, as a result of which a force acts on the control piston (14) in the direction of the switchover position.

5. The control device (1) in accordance with one of the claims 2 to 4, **characterised in that**, a preloaded compression spring (15) is arranged between the control piston (14) and the valve housing, acting in the same sense as the second active surface (18) in the direction of the idle position.

6. The control device (1) in accordance with one of the claims 3 to 5, **characterised in that**, the surface area ratio between the second active surface (18) and the first active surface (16) has a value selected from a range with a lower limit of 10, in particular 20, preferably 25, and an upper limit of 50, in particular 40, preferably 30.

7. The control device (1) in accordance with claims 5 and 6, **characterised in that**, with a maximum pressure provided at the high pressure port connection (10) in a range from 200 bar to 250 bar, the preload on the compression spring (15) is selected such that the switchover of the control piston (14) takes place with an increase of the pressure difference between the pressure in the supply line (9) acting on the first active surface (16), and the pressure in the return line (11) acting on the second active surface (18), above a value selected from a range with a lower limit of 100 bar, preferably 120 bar, in particular 140 bar, and an upper limit of 200 bar, preferably 180 bar, in particular 160 bar.

8. The control device (1) in accordance with one of the claims 2 to 7, **characterised in that**, a throttle element (21) is arranged in the return line (11) between the changeover valve (13) and the return port connection (12).

9. The control device (1) in accordance with one of the claims 2 to 8, **characterised in that**, in the switchover position the whole of the end face of the control piston (14), acting in the same sense as the first active surface (16), is connected in fluid terms with the supply line (9).

10. The control device (1) in accordance with one of the claims 2 to 9, **characterised in that**, a non-return valve (24), blocking return in the direction towards the changeover valve (13), is arranged in the line (8) to the turning ram piston chamber (5), with a control piston connected in fluid terms with the line (7) to the turning ram annulus (6).

11. The control device (1) in accordance with one of the claims 2 to 10, **characterised in that**, a throttling check valve (23), throttling fluid in the direction of the changeover valve (13), is arranged in the line (7) to the turning ram annulus (6).

12. A turnover plough with a control device, **characterised in that**, the control device is designed in accordance with one of the claims 2 to 11.

13. A method for the control of hydraulic rams when executing the process of turning a turnover plough with a plough frame pivoting mechanism, wherein
in a first phase the turnover plough is pivoted into a working position by extension of a pivoting ram (59), in a second phase it is rotated by retraction of a turning ram (52), after reaching a dead point of the movement of the turning ram (52) it is subsequently rotated further in a third phase by extension of the turning ram (52), and in a fourth phase it is once again pivoted out of the working position by retraction of the pivoting ram (59), to which end a successive actuation of the pivoting and turning rams (59, 52) connected in parallel to one another between a supply line (66) from a high pressure port connection (67) and a return line (68) to a return port connection (69) is effected such that the pivoting ram (59) in the first phase has higher priority, in that the return flow of hydraulic fluid from the turning ram piston chamber (55) to the return port connection (69) is blocked by means of a stop valve (73) during the outflow of hydraulic fluid from the pivoting ram annulus (63), and after the automatic reversal of the directions of movement of the turning ram (52) and the pivoting ram (59) at the dead point by means of a changeover valve (72), with a control piston (80) that can be displaced in a valve housing between an idle position and a switchover position, the turning ram (52) is preferably in the third phase, in that the return flow of hydraulic fluid from the pivoting ram piston chamber (62) to the return port connection (69) is blocked by means of the stop valve (73) during the outflow of hydraulic fluid from the turning ram annulus (56), wherein
the movement of the changeover valve (72) into the switchover position is triggered by an increase of the pressure difference, between a rising pressure in the supply line (66) with the arrival at the dead point between the second and third phases, and a falling pressure in the return line (68) of the turning ram (52) at the dead point, above a threshold value,
**characterised in that**,
the hydraulic fluid displaced in the turning ram (52) and pivoting ram (59) is guided by the changeover valve (72), in a return line (70) that can be given lower priority, and a return line (71) that can be given higher priority, to the stop valve (73) and the pressure difference acts directly on the control piston (80), **in that** a first active surface (84) of the control piston (80), or an actuation element acting on the latter, in all operating states is acted upon by the pressure in the supply line (66) in the direction of the switchover position, and at the same time a second active surface (86), or an actuation element acting on the latter is acted upon by the pressure in the return line (71) that can be given higher priority in the direction of the idle position.

14. A secondary control device (51) for a turnover plough that can be hydraulically actuated, comprising a double-acting turning ram (52) with a line (57) to the turning ram annulus (56), and a line (58) to the turning ram piston chamber (55), and a double-acting pivoting ram (59) with a line (65) to the pivoting ram piston chamber (62) and also a line (64) to the pivoting ram annulus (63), at least one supply line (66) for purposes of supplying hydraulic fluid from a high pressure port connection (67), at least one return line (68) for purposes of returning the hydraulic fluid displaced in the turning ram (52), or in the pivoting ram (59), to a return port connection (69), a changeover valve (72) with a control piston (80) in a valve housing that can be displaced between an idle position and a switchover position, which in the idle position connects the lines (57, 65) to the turning ram annulus (56) and to the pivoting ram piston chamber (62) with the supply line (66), and in the switchover position connects the lines (58, 64) to the turning ram piston chamber (55) and to the pivoting ram annulus (63) with the supply line (66), and automatically retains its position in the switchover position, a stop valve (73) for purposes of giving priority to the turning ram (52) or the pivoting ram (59) by blocking the return flow of hydraulic fluid from the other ram in each case, preferably for purposes of executing the method in accordance with claim 13,
**characterised in that**,
from the changeover valve (72) a return line (70) that can be given lower priority and a return line (71) that can be given higher priority lead to a stop valve (73) arranged between the changeover valve (72) and the return port connection (69); in all positions of the changeover valve (72) a first active surface (84) on the control piston (80), or on an actuation element acting on the control piston (80), is connected in fluid terms via a control line (85) in a fixed manner with the supply line (66), and a second active surface (86), on the control piston (80), or on an actuation element acting on the control piston (80), orientated in a contrary sense to the first active surface (84), is connected in fluid terms with the return line (70) that can be given lower priority.

15. The secondary control device (51) in accordance with claim 14, **characterised in that**, the first active surface (84) is smaller than the second active surface (86).

16. The secondary control device (51) in accordance with claim 15, **characterised in that**, the actuation element forming the first active surface (84) is designed in the form of a pin, and is guided in the control piston (80) such that it can move axially whilst sealed, wherein
in the interior of the control piston (80) one end in the idle position is connected in fluid terms with the supply line (66), and the length of the actuation element is selected such that the second end is supported on the valve housing by means of axial movement, as a result of which a force acts on the control piston (80) in the direction of the switchover position.

17. The secondary control device (51) in accordance with one of the claims 14 to 16,
**characterised in that**,
a preloaded compression spring (83) is arranged between the control piston (80) and the valve housing, acting in the same sense as the second active surface (86) in the direction of the idle position.

18. The secondary control device (51) in accordance with one of the claims 15 to 17,
**characterised in that**,
the surface area ratio between the second active surface (86) and the first active surface (84) has a value selected from a range with a lower limit of 10, in particular 20, preferably 25, and an upper limit of 50, in particular 40, preferably 30.

19. The control device (51) in accordance with claims 17 and 18, **characterised in that**, with a maximum pressure provided at the high pressure port connection (67) in a range from 200 bar to 250 bar, the preload on the compression spring (83) is selected such that the switchover of the control piston (80) takes place with an increase of the pressure difference between the supply line (66) and the return line (70) that can be given lower priority, above a value selected from a range with a lower limit of 100 bar, preferably 120 bar, in particular 140 bar, and an upper limit of 200 bar, preferably 180 bar, in particular 160 bar.

20. The secondary control device (51) in accordance with one of the claims 14 to 19,
**characterised in that**,
a throttle element (89) is arranged in the return line (70) that can be given lower priority, between the changeover valve (72) and the stop valve (73).

21. The secondary control device (51) in accordance with one of the claims 14 to 20,
**characterised in that**,
in the switchover position the whole of the end face of the control piston (80), acting in the same sense as the first active surface (84), is connected in fluid terms with the supply line (66), or the line (58) to the turning ram piston chamber (55), or the line (64) to the pivoting ram annulus (63).

22. The secondary control device (51) in accordance with one of the claims 14 to 21,
**characterised in that**,
a non-return valve (91), blocking return in the direction towards the changeover valve (72), is arranged in the line (58) to the turning ram piston chamber (55), with a control piston connected in fluid terms with the line (57) to the turning ram annulus (56).

23. The secondary control device (51) in accordance with one of the claims 14 to 22,
**characterised in that**,
a throttling check valve (90), throttling fluid in the direction of the changeover valve (72), is arranged in the line (58) to the turning ram piston chamber (55).

24. The secondary control device (51) in accordance with one of the claims 14 to 23,
**characterised in that**,
a throttling check valve (90), throttling fluid in the direction of the changeover valve (72), is arranged in the line (57) to the turning ram annulus (56).

25. The secondary control device (51) in accordance with one of the claims 14 to 24,
**characterised in that**,
an non-return valve (93) that can be unblocked, blocking return in the direction towards the changeover valve, is arranged in each of the two lines (64, 65) to the pivoting ram (59), with a control piston, or a double non-return valve that can be reciprocally unblocked, connected in fluid terms via a control line (94) with the other line in each case.

26. The secondary control device (51) in accordance with one of the claims 14 to 25,
**characterised in that**,
a throttling check valve (90), throttling fluid in the direction of the changeover valve (72), is arranged in the line (65) to the pivoting ram piston chamber (62).

27. The secondary control device (51) in accordance with one of the claims 14 to 26,
**characterised in that**,
the supply line (66) between the high pressure port connection (67) and the changeover valve (72) is bifurcated into a turning ram supply line (81) and a pivoting ram supply line (82).

28. The secondary control device (51) in accordance with one of the claims 14 to 27,
**characterised in that**,
the changeover valve (72) is designed as an 8/2-way valve.

29. The secondary control device (51) in accordance with one of the claims 14 to 28,
**characterised in that**,
a control piston (74), which can be moved between an idle position determined by a preloaded compression spring (75) and a switchover position, is arranged in the stop valve (73), wherein
in the idle position the return line (70) that can be given lower priority and the return line (71) that can be given higher priority are connected in fluid terms with the common return line (68), and in the switchover position the return line (70) that can be given lower priority is blocked, while the return line (71) that can be given higher priority is connected in fluid terms with the common return line (68).

30. The secondary control device (51) in accordance with one of the claims 14 to 29,
**characterised in that**,
in the stop valve (73) the flow path for the return line (71) that can be given higher priority has a throttle element (78).

31. The secondary control device (51) in accordance with claim 29 or 30,
**characterised in that**,
an end face (76) of the control piston (74) in the stop valve (73), acting in the direction of the switchover position of the stop valve (73), is connected via a control line (77) with the return line (71) that can be given higher priority.

32. The secondary control device (51) in accordance with one of the claims 29 to 31,
**characterised in that**,
the preload on the compression spring (75) is selected such that during the outflow of hydraulic fluid in the return line (71) that can be given higher priority the control piston (74), by means of the pressure in the return line (71) that can be given higher priority, is moved against the force of the compression spring (75) into the switchover position.

33. A turnover plough with a secondary control device, **characterised in that**,
the secondary control device is designed in accordance with one of the claims 14 to 32.

## Revendications

1. Procédé destiné à commander un vérin de retournement à double effet (2) lors de l'exécution de l'opération de retournement d'une charrue réversible, dans lequel la charrue réversible est inversée dans une première phase par l'entrée de la tige de piston (4) du vérin de retournement (2) et, lorsqu'un point mort du mouvement est atteint, elle est à nouveau inversée dans une deuxième phase après la commutation du sens de mouvement de la tige de piston (4), la commutation du sens du mouvement étant réalisée par au moins une vanne de distribution d'inversion (13) agencée dans une conduite d'alimentation (9) allant d'un raccord à haute pression (10) et d'une conduite de retour (11) à un raccord de retour (12) avec un piston de commande (14) pouvant être déplacé entre une position de repos et une position de commutation dans un logement de vanne et le déplacement du piston de commande (14) de la position de repos à la position de commutation étant déclenché par l'augmentation de la pression dans la conduite d'alimentation (9) du vérin de retournement (2) et la diminution de la pression dans la conduite de retour (11) du vérin de retournement (2) lorsque le point mort du mouvement de la tige de piston (4) est atteint, une première surface de travail (16) étant réalisée sur le piston de commande (14) ou sur un élément d'actionnement agissant sur celui-ci et une deuxième surface de travail (18) étant réalisée dans le sens contraire à celle-ci sur le piston de commande (14) ou sur un élément d'actionnement agissant sur celui-ci, et la deuxième surface de travail (18) étant poussée dans le sens de la position de repos avec la pression dans la conduite de retour (11) entre la vanne d'inversion (13) et le raccord de retour (12), **caractérisé en ce que** la première surface de travail (16) est poussée, dans tous les états de fonctionnement, dans le sens de la position de commutation avec la pression dans la conduite d'alimentation (9) entre le raccord à haute pression (10) et la vanne d'inversion (13).

2. Dispositif de commande (1) pour une charrue réversible à actionnement hydraulique, comprenant un vérin de retournement à double effet (2) avec une conduite (7) allant vers le logement annulaire du vérin de retournement (6) et une conduite (8) allant vers le logement de piston du vérin de retournement (5), une conduite d'alimentation (9) pour l'amenée de fluide hydraulique depuis un raccord à haute pression (10) et une conduite de retour (11) pour l'évacuation du fluide hydraulique amené dans le vérin de retournement (2) jusqu'à un raccord de retour (12), au moins une vanne d'inversion (13) avec un piston de commande (14) pouvant être déplacé entre une position de repos et une position de commutation dans un logement de vanne, qui, dans la position de repos, relie la conduite (7) allant vers le logement annulaire du vérin de retournement (6) avec la conduite d'alimentation (9) et, dans la position de commutation, relie la conduite (8) allant vers le logement de piston du vérin de retournement (5) avec la conduite d'alimentation (9) et qui, dans la position de commutation, est maintenu automatiquement, une première surface de travail (16) étant réalisée sur le piston de commande (14) ou sur un élément d'actionnement agissant sur celui-ci et une deuxième surface de travail (18) étant réalisée dans le sens contraire à celle-ci sur le piston de commande (14) ou sur un élément d'actionnement agissant sur celui-ci, et la deuxième surface de travail (18) étant en liaison fluidique avec la conduite de retour (11) par le biais d'une conduite de commande (19), de préférence pour l'exécution du procédé selon la revendication 1, **caractérisé en ce que** la première surface de travail (16) est en liaison fluidique de façon fixe avec la conduite d'alimentation (9) par le biais d'une conduite de commande (17) dans toutes les positions de la vanne d'inversion (13).

3. Dispositif de commande (1) selon la revendication 2, **caractérisé en ce que** la première surface de travail (16) est plus petite que la deuxième surface de travail (18).

4. Dispositif de commande (1) selon la revendication 3, **caractérisé en ce que** l'élément d'actionnement formant la première surface de travail (16) est réalisé en forme de tige et monté dans le logement de vanne de façon mobile axialement et de façon étanche, une extrémité étant en liaison fluidique avec la conduite d'alimentation (9) dans le logement de vanne et la longueur de l'élément d'actionnement étant choisie de telle sorte que la deuxième extrémité vient en appui sur le piston de commande (14) par un déplacement axial, ce par quoi une force s'exerce sur le piston de commande (14) dans le sens de la position de commutation.

5. Dispositif de commande (1) selon l'une des revendications 2 à 4, **caractérisé en ce qu'**un ressort de pression précontraint (15), agissant dans le même sens que la deuxième surface de travail (18) dans le sens de la position de repos, est agencé entre le piston de commande (14) et le logement de vanne.

6. Dispositif de commande (1) selon l'une des revendications 3 à 5, **caractérisé en ce que** le rapport de la surface entre la deuxième surface de travail (18) et la première surface de travail (16) présente une valeur choisie dans une marge ayant une limite inférieure de 10, en particulier 20, et de préférence 25 et une limite supérieure de 50, en particulier 40, et de préférence 30.

7. Dispositif de commande (1) selon les revendications 5 et 6, **caractérisé en ce que** pour une pression maximale fournie au raccord à haute pression (10) comprise dans une marge de 200 bars à 250 bars, la précontrainte du ressort de pression (15) est choisie de telle sorte que la commutation du piston de commande (14) est réalisée lorsque la pression différentielle entre la pression s'exerçant sur la première surface de travail (16) dans la conduite d'alimentation (9) et la pression s'exerçant sur la deuxième surface de travail (18) dans la conduite de retour (11) augmente au-dessus d'une valeur choisie dans une marge ayant une limite inférieure de 100 bars, de préférence 120 bars, et en particulier 140 bars et une limite supérieure de 200 bars, de préférence 180 bars, et en particulier 160 bars.

8. Dispositif de commande (1) selon l'une des revendications 2 à 7, **caractérisé en ce qu'**un élément d'étranglement (21) est agencé dans la conduite de retour (11) entre la vanne d'inversion (13) et le raccord de retour (12).

9. Dispositif de commande (1) selon l'une des revendications 2 à 8, **caractérisé en ce que** dans la position de commutation, la surface avant tout entière du piston de commande (14), agissant dans le même sens que la première surface de travail (16), est en liaison fluidique avec la conduite d'alimentation (9).

10. Dispositif de commande (1) selon l'une des revendications 2 à 9, **caractérisé en ce qu'**un clapet antiretour (24) bloquant dans le sens de la vanne d'inversion (13), qui comprend un piston de pilotage en liaison fluidique avec la conduite (7) allant vers le logement annulaire du vérin de retournement (6), est agencé dans la conduite (8) allant vers le logement de piston du vérin de retournement (5).

11. Dispositif de commande (1) selon l'une des revendications 2 à 10, **caractérisé en ce qu'**un clapet antiretour d'étranglement (23) étranglant dans le sens de la vanne d'inversion (13) est agencé dans la conduite (7) allant vers le logement annulaire du vérin de retournement (6).

12. Charrue réversible ayant un dispositif de commande, **caractérisée en ce que** le dispositif de commande est réalisé selon l'une des revendications 2 à 11.

13. Procédé destiné à commander des vérins hydrauliques lors de l'exécution de l'opération de retournement d'une charrue réversible avec pivotement du bâti de la charrue, dans lequel la charrue réversible est pivotée à l'intérieur dans une première phase par la sortie d'un vérin de pivotement (59), inversée dans une deuxième phase par l'entrée d'un vérin de retournement (52), à nouveau inversée ensuite dans une troisième phase par la sortie du vérin de retournement (52) après qu'un point mort du mouvement du vérin de retournement (52) a été atteint et à nouveau pivotée à l'extérieur dans une quatrième phase par l'entrée du vérin de pivotement (59), ce pour quoi un actionnement successif des vérins de pivotement (59) et de retournement (52) montés en parallèle l'un avec l'autre entre une conduite d'alimentation (66) venant d'un raccord à haute pression (67) et une conduite de retour (68) allant vers un raccord de retour (69) est réalisé en ce que dans la première phase, le vérin de pivotement (59) est déterminé comme prioritaire en ce que le flux de retour de fluide hydraulique du logement de piston du vérin de retournement (55) au raccord de retour (69) est bloqué au moyen d'une vanne d'arrêt (73) pendant l'évacuation de fluide hydraulique depuis le logement annulaire du vérin de pivotement (59), et après l'inversion automatique des sens de mouvement du vérin de retournement (52) et du vérin de pivotement (59) au point mort par une vanne d'inversion (72) avec un piston de commande (80) pouvant être déplacée entre une position de repos et une position de commutation dans un logement de vanne, dans la troisième phase, le vérin de retournement (52) est privilégié en ce que le flux de retour de fluide hydraulique du logement de piston du vérin de pivotement (62) au raccord de retour (69) est bloqué au moyen de la vanne d'arrêt (73) pendant l'évacuation de fluide hydraulique depuis le logement annulaire du vérin de retournement (56), le déplacement de la vanne d'inversion (72) dans la position de commutation étant déclenché lorsque la pression différentielle entre une pression en augmentation dans la conduite d'alimentation (66), lorsque le point mort entre les deuxième et troisième phases est atteint, et une pression en diminution dans la conduite de retour (68) du vérin de retournement (52), au point mort, augmente au-delà d'une valeur de seuil, **caractérisé en ce que** le fluide hydraulique amené dans le vérin de retournement (52) et le vérin de pivotement (59) est amené par la vanne d'inversion (72) dans une conduite de retour (70) pouvant être déterminée comme secondaire et une conduite de retour (71) pouvant être déterminée comme prioritaire jusqu'à la vanne d'arrêt (73) et la différence de pression agit directement sur le piston de commande (72) **en ce qu'**une première surface de travail (84) du piston de commande (80) ou un élément d'actionnement agissant sur celle-ci est poussée, dans tous les états de fonctionnement, dans le sens de la position de commutation avec la pression dans la conduite d'alimentation (66), et en même temps, une deuxième surface de travail (86) ou un élément d'actionnement agissant sur celle-ci est poussée dans la direction de la position de repos avec la pression dans la conduite de retour (71) pouvant être déterminée comme secondaire.

14. Dispositif de commande séquentielle (51) pour une charrue réversible à actionnement hydraulique avec pivotement du bâti de la charrue, comprenant un vérin de retournement à double effet (52) avec une conduite (57) allant vers le logement annulaire du vérin de retournement (56) ainsi qu'une conduite (58) allant vers le logement de piston du vérin de retournement (55) et un vérin de pivotement à double effet (59) avec une conduite (65) allant vers le logement de piston du vérin de pivotement (62) ainsi qu'une conduite (64) allant vers le logement annulaire du vérin de pivotement (63), au moins une conduite d'alimentation (66) pour l'amenée de fluide hydraulique depuis un raccord à haute pression (67), au moins une conduite de retour (68) pour l'évacuation du fluide hydraulique amené dans le vérin de retournement (52) ou dans le vérin de pivotement (59) jusqu'à un raccord de retour (69), une vanne d'inversion (72) avec un piston de commande (80) pouvant être déplacé entre une position de repos et une position de commutation dans un logement de vanne, qui, dans la position de repos, relie les conduites (57, 65) allant vers le logement annulaire du vérin de retournement (56) et vers le logement de piston du vérin de pivotement (62) avec la conduite d'alimentation (66) et, dans la position de commutation, relie les conduites (58, 64) allant vers le logement de piston du vérin de retournement (55) et vers le logement annulaire du vérin de pivotement (63) avec la conduite d'alimentation (66) et qui, dans la position de commutation, est maintenu automatiquement, une vanne d'arrêt (73) pour déterminer comme prioritaire le vérin de retournement (52) ou le vérin de pivotement (59) en bloquant le flux de retour de fluide hydraulique venant de l'autre vérin respectif, de préférence pour l'exécution du procédé selon la revendication 13, **caractérisé en ce que** depuis la vanne d'inversion (72), une conduite de retour (70) pouvant être déterminée comme secondaire et une conduite de retour (71) pouvant être déterminée comme prioritaire conduisent à la vanne d'arrêt (73) agencée entre la vanne d'inversion (72) et le raccord de retour (69), dans toutes les positions de la vanne d'inversion (72), une première surface de travail (84) est en liaison fluidique de façon fixe avec la conduite d'alimentation (66) par le biais d'une conduite de commande (85) au niveau du piston de commande (80) ou d'un élément d'actionnement agissant sur le piston de commande (80) et une deuxième surface de travail (86) orientée dans un sens contraire à la première surface de travail (84) est en liaison fluidique avec la conduite de retour (70) pouvant être déterminée comme secondaire au niveau du piston de commande (80) ou d'un élément d'actionnement agissant sur le piston de commande (80).

15. Dispositif de commande séquentielle (51) selon la revendication 14, **caractérisé en ce que** la première surface de travail (84) est plus petite que la deuxième surface de travail (86).

16. Dispositif de commande séquentielle (51) selon la revendication 15, **caractérisé en ce que** l'élément d'actionnement formant la première surface de travail (84) est réalisé en forme de tige et monté dans le piston de commande (80) de façon mobile axialement et de façon étanche, une extrémité étant en liaison fluidique avec la conduite d'alimentation (66) à l'intérieur du piston de commande (80) dans la position de repos et la longueur de l'élément d'actionnement étant choisie de telle sorte que la deuxième extrémité vient en appui sur le logement de vanne par un déplacement axial, ce par quoi une force s'exerce sur le piston de commande (80) dans le sens de la position de commutation.

17. Dispositif de commande séquentielle (51) selon l'une des revendications 14 à 16, **caractérisé en ce qu'**un ressort de pression précontraint (83), agissant dans le même sens que la deuxième surface de travail (86) dans le sens de la position de repos, est agencé entre le piston de commande (80) et le logement de vanne.

18. Dispositif de commande séquentielle (51) selon l'une des revendications 15 à 17, **caractérisé en ce que** le rapport de la surface entre la deuxième surface de travail (86) et la première surface de travail (84) présente une valeur choisie dans une marge ayant une limite inférieure de 10, en particulier 20, et de préférence 25 et une limite supérieure de 50, en particulier 40, et de préférence 30.

19. Dispositif de commande séquentielle (51) selon les revendications 17 et 18, **caractérisé en ce que** pour une pression maximale fournie au raccord à haute pression (67) comprise dans une marge de 200 bars à 250 bars, la précontrainte du ressort de pression (83) est choisie de telle sorte que la commutation du piston de commande (80) est réalisée lorsque la pression différentielle entre la conduite d'alimentation (66) et la conduite de retour (70) pouvant être déterminée comme secondaire augmente au-dessus d'une valeur choisie dans une marge ayant une limite inférieure de 100 bars, de préférence 120 bars, et en particulier 140 bars et une limite supérieure de 200 bars, de préférence 180 bars, et en particulier 160 bars.

20. Dispositif de commande séquentielle (51) selon l'une des revendications 14 à 19, **caractérisé en ce qu'**un élément d'étranglement (89) est agencé dans la conduite de retour (70) pouvant être déterminée comme secondaire entre la vanne d'inversion (72) et la vanne d'arrêt (73).

21. Dispositif de commande séquentielle (51) selon l'une des revendications 14 à 20, **caractérisé en ce que** dans la position de commutation, la surface avant tout entière du piston de commande (80), agissant dans le même sens que la première surface de travail (84), est en liaison fluidique avec la conduite d'alimentation (66) ou la conduite (58) allant vers le logement de piston du vérin de retournement (55) ou la conduite (64) allant vers le logement annulaire du vérin de pivotement (63).

22. Dispositif de commande séquentielle (51) selon l'une des revendications 14 à 21, **caractérisé en ce qu'**un clapet antiretour (91) bloquant dans le sens de la vanne d'inversion (72), qui comprend un piston de pilotage en liaison fluidique avec la conduite (57) allant vers le logement annulaire du vérin de retournement (56), est agencé dans la conduite (58) allant vers le logement de piston du vérin de retournement (55).

23. Dispositif de commande séquentielle (51) selon l'une des revendications 14 à 22, **caractérisé en ce qu'**un clapet antiretour d'étranglement (90) étranglant dans le sens de la vanne d'inversion (72) est agencé dans la conduite (58) allant vers le logement de piston du vérin de retournement (55).

24. Dispositif de commande séquentielle (51) selon l'une des revendications 14 à 23, **caractérisé en ce qu'**un clapet antiretour d'étranglement (90) étranglant dans le sens de la vanne d'inversion (72) est agencé dans la conduite (57) allant vers le logement annulaire du vérin de retournement (56).

25. Dispositif de commande séquentielle (51) selon l'une des revendications 14 à 24, **caractérisé en ce que** dans chacune des deux conduites (64, 65) allant vers le vérin de pivotement (59) est agencé un clapet antiretour (93) pouvant être déverrouillé, bloquant dans le sens de la vanne de commutation, ayant un piston de pilotage en liaison fluidique avec l'autre conduite respective par le biais d'une conduite de commande (94) ou un clapet antiretour double pouvant être déverrouillé alternativement.

26. Dispositif de commande séquentielle (51) selon l'une des revendications 14 à 25, **caractérisé en ce qu'**un clapet antiretour d'étranglement (90) étranglant dans le sens de la vanne d'inversion (72) est agencé dans la conduite (65) allant vers le logement de piston du vérin de pivotement (62).

27. Dispositif de commande séquentielle (51) selon l'une des revendications 14 à 26, **caractérisé en ce que** la conduite d'alimentation (66) se ramifie entre le raccord à haute pression (67) et la vanne d'inversion (72) dans une conduite d'alimentation du vérin de retournement (81) et une conduite d'alimentation du vérin de pivotement (82).

28. Dispositif de commande séquentielle (51) selon l'une des revendications 14 à 27, **caractérisé en ce que** la vanne d'inversion (72) est réalisée comme vanne à 8/2 voies.

29. Dispositif de commande séquentielle (51) selon l'une des revendications 14 à 28, **caractérisé en ce qu'**un piston de commande (74) pouvant être déplacé entre une position de repos déterminée par un ressort de pression précontraint (75) et une position de commutation est agencé dans la vanne d'arrêt (73), étant entendu que dans la position de repos, la conduite de retour (70) pouvant être déterminée comme secondaire et la conduite de retour (71) pouvant être déterminée comme prioritaire sont en liaison fluidique avec la conduite de retour commune (68), et dans la position de commutation, la conduite de retour (70) pouvant être déterminée comme secondaire est bloquée et la conduite de retour (71) pouvant être déterminée comme prioritaire est en liaison fluidique avec la conduite de retour commune (68).

30. Dispositif de commande séquentielle (51) selon l'une des revendications 14 à 29, **caractérisé en ce que** le trajet d'écoulement pour la conduite de retour (71) pouvant être déterminée comme prioritaire présente un élément d'étranglement (78) dans la vanne d'arrêt (73).

31. Dispositif de commande séquentielle (51) selon la revendication 29 ou 30, **caractérisé en ce qu'**une surface avant (76) du piston de commande (74) agissant dans le sens de la position de commutation de la vanne d'arrêt (73) est en liaison fluidique dans la vanne d'arrêt (73) avec la conduite de retour (71) pouvant être déterminée comme prioritaire par le biais d'une conduite de commande (77).

32. Dispositif de commande séquentielle (51) selon l'une des revendications 29 à 31, **caractérisé en ce que** la précontrainte du ressort de pression (75) est choisie de telle sorte que pendant l'écoulement de fluide hydraulique dans la conduite de retour (71) pouvant être déterminée comme prioritaire, le piston de commande (74) est déplacé dans la position de commutation contre la force du ressort de pression (75) par la pression se trouvant dans la conduite de retour (71) pouvant être déterminée comme prioritaire.

33. Charrue réversible ayant un dispositif de commande séquentielle, **caractérisée en ce que** le dispositif de commande séquentielle est réalisé selon l'une des revendications 14 à 32.
